# EUROPEAN PATENT SPECIFICATION

(11) **EP 4 383 409 B1**
(45) Date of publication and mention of the grant of the patent: **23.09.2026**
(21) Application number: 22898860.6
(22) Date of filing: 25.10.2022
(51) Int. Cl.: H01M 10/6567, H01M 10/6556, H01M 10/613, H01M 10/42

(54) **COOLING MEMBER, AND BATTERY MODULE AND BATTERY PACK INCLUDING SAME**
KÜHLELEMENT SOWIE BATTERIEMODUL UND BATTERIEPACK DAMIT
ÉLÉMENT DE REFROIDISSEMENT, ET MODULE DE BATTERIE ET BLOC-BATTERIE LE COMPRENANT

(30) Priority: 26.11.2021 KR 20210165251; 02.12.2021 KR 20210170979
(43) Date of publication of application: 12.06.2024
(60) Divisional application: 26195793.0 / 4 811 492
(73) Proprietor: LG Energy Solution, Ltd., Seoul 07335 (KR)
(72) Inventor: YU, Sanghyun, Daejeon 34122 (KR); CHO, Young Bum, Daejeon 34122 (KR); YOON, Han Ki, Daejeon 34122 (KR); JEONG, Ji Won, Daejeon 34122 (KR); NAMGOUNG, Hyeok, Daejeon 34122 (KR); KU, Wonhoe, Daejeon 34122 (KR)
(74) Representative: Plasseraud IP
(86) International application number: PCT/KR2022/016372
(87) International publication number: WO 2023/096178

(56) References cited:
- KR-A- 20140 005 323
- KR-A- 20150 081 514
- KR-A- 20160 146 349
- KR-A- 20200 041 708
- KR-A- 20200 107 120
- KR-A- 20210 109 108
- US-A1- 2009 159 251
- US-A1- 2016 049 705

## Description

### [TECHNICAL FIELD]

### Cross Citation with Related Application(s)

This application claims the benefit of Korean Patent Application No. 10-2021-0165251 filed on November 26, 2021 and Korean Patent Application No. 10-2021-0170979 filed on December 2, 2021 in the Korean Intellectual Property Office.

The present disclosure relates to a cooling member, and a battery module and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

Meanwhile, in the case of a secondary battery used for small-sized devices, two to three battery cells are used, but in the case of a secondary battery used for a middle or large-sized device such as an automobile, a battery module or a battery pack in which a plurality of battery cells are electrically connected is used. Since middle or large-sized battery modules are preferably manufactured with as small a size and weight as possible, a prismatic battery, a pouch-type battery, or the like, which can be stacked with high integration and has a small weight relative to capacity, is mainly used as a battery cell of the middle or large-sized battery modules.

Meanwhile, the battery cell mounted onto the battery module may generate a large amount of heat in the charge and discharge process. If the temperature becomes higher than an appropriate temperature due to overcharging or the like, the performance may deteriorate. If the temperature rise is excessive, there is a risk of explosion or ignition. If an ignition phenomenon occurs inside the battery module, high-temperature heat, gas, or flame may be emitted to the outside of the battery module, wherein the heat, gas, spark, flame or like emitted from one battery module may be transmitted to other adjacent battery modules at a narrow interval within the battery pack, which can lead to a cascading thermal runaway phenomenon within the battery pack.

In order to prevent such a thermal runaway phenomenon, the conventional battery module is provided with a cooling member, a flame arresting member or the like. In recent years, attempts have been made to apply a water-cooled cooling member or a water-cooled flame arresting member into which cooling water is injected. In the case of a conventional air-cooled cooling member in which cooling water is not provided, there is a problem that the battery cell stack cannot be uniformly cooled because a temperature gradient is formed in the cooling member depending on the position of a fan. However, the water-cooled cooling member has the advantage of minimizing temperature deviations in the cooling member because the temperature of the cooling member can be maintained relatively constant by the cooling water.

The water-cooled cooling member may be formed by joining an upper plate and a lower plate, and store cooling water in a space between the upper plate and the lower plate. Conventionally, the upper plate and the lower plate were mainly coupled using a method such as welding in order to secure watertightness. However, if the physical properties of the upper plate and the lower plate are different from each other, or if at least one of the upper plate and the lower plate partially contains materials having different physical properties, and the like, there was a problem that the upper plate and the lower plate are not well coupled by welding, or the upper plate and the lower plate may be damaged during the joining process, which limits the materials usable for the water-cooled cooling member. Therefore, there is a need for a technique that can solve the problems of conventional techniques.

In addition, in order to prevent such a thermal runaway phenomenon, a conventional battery module is provided with a water injection system that suppresses fires by injecting cooling water through a nozzle or the like when a fire is firmed inside the battery module. However, injecting cooling water from a tank disposed outside the battery module 100 or the battery pack 1000 requires multiple processes such as checking whether a fire has occurred, determining whether to inject cooling water, and transferring the cooling water, which makes it difficult to find the suitable timing for suppressing the fire.

Therefore, there is a need for a new technology that can rapidly suppress the thermal runaway phenomenon by injecting cooling water at a proper place at a proper time when ignition occurs inside the battery module 100 or the battery pack 1000.

Document US 2016/049705 A1 relates to battery thermal regulation and more particularly the heat exchange plates for battery thermal management, notably in the motor vehicle domain.

Document US 2009/159251 A1 relates to a heat exchanger plate for a plate heat exchanger

### [DETAILED DESCRIPTION OF THE INVENTION]

### [Technical Problem]

It is an object of the present disclosure to provide a cooling member that enables application of various materials and designs, and a battery module and a battery pack including the same.

It is another object of the present disclosure to provide a cooling member that can supply cooling water to a proper place at a proper time when ignition occurs inside the battery module 100 or the battery pack 1000, and a battery module and a battery pack including the same.

However, the problem to be solved by the embodiments of the present disclosure is not limited to the above-described problems, and can be variously expanded within the scope of the technical idea included in the present disclosure.

### [Technical Solution]

The invention is as defined in the appended set of claims.

According to one embodiment of the present disclosure, there is provided a cooling member comprising: an upper plate, a lower plate, and cooling water contained into an inner space between the upper plate and the lower plate, wherein sealing parts are formed at edges of the upper plate and the lower plate, wherein a coupling groove is formed inside the sealing part, and wherein a fastening part coupled by a fastening member is formed outside the sealing part.

A sealing member may be located between the upper plate and the lower plate on which the sealing part is formed.

A first recessed part, which is formed by introducing the upper plate into the lower plate or by introducing the lower plate into the upper plate, may be formed in the coupling groove.

A flow path forming groove that guides the flow of cooling water may be formed in the cooling member.

A second recessed part, which is formed by introducing the upper plate into the lower plate or by introducing the lower plate into the upper plate, may be formed in the flow path forming groove.

An anti-deformation groove that prevents shape deformation due to the inflow of cooling water may be formed in the cooling member.

A third recessed part, which is formed by introducing the upper plate into the lower plate or by introducing the lower plate into the upper plate, may be formed in the anti-deformation groove.

A recessed part, which is formed by introducing the upper plate into the lower plate or by introducing the lower plate into the upper plate, is formed in the cooling member, wherein the recessed part has a depth, and a direction in which the depth extends is perpendicular to the direction of flow of cooling water inside the cooling member.

The recessed part includes an upper recessed part in which the upper plate is deformed and a lower recessed part in which the lower plate is deformed, and the lowest point of the upper surface of the upper recessed part may be located below the upper surface of the lower plate on which the recessed part is not formed.

The lowest point of the upper surface of the upper recessed part may be located under the lower surface of the lower plate in which the recessed part is not formed.

The recessed part includes an upper recessed part in which the upper plate is deformed and a lower recessed part in which the lower plate is deformed, and the maximum value of the outer diameter of the upper recessed part may be larger than the minimum value of the inner diameter of the lower recessed part.

The lower plate may include at least two materials having different physical properties.

The cooling member further includes an inlet port and an outlet port for injecting cooling water into an inner space between the upper plate and the lower plate, the inlet port and the outlet port are connected to an external heat exchanger, and cooling water of the cooling member may be circulated through the inlet port and the outlet port.

According to another embodiment of the present disclosure, there is provided a cooling member located on an upper part of a battery cell stack in which a plurality of battery cells are stacked, the cooling member comprising: an upper plate, a lower plate, and cooling water contained into an inner space between the upper plate and the lower plate, wherein the lower plate includes an opening, an upper surface of the lower plate is covered by a cover film of the lower plate, an outer contour shape of the cover film is substantially the same as an outer contour shape of the lower plate, the cover film is made from a material with a lower melting point than that of the lower plate, and the cover film is melted at a predetermined temperature or higher to thereby open the opening of the lower plate.

The cover film may be attached to the lower plate.

A thickness of the cover film may be 0.5 to 1.0 mm.

The cover film may be made from at least one material selected from high density polyethylene (HDPE), polyethylene (PE), polypropylene (PP) and polyphenylene oxide (PPO).

Sealing parts are formed at the edges of the upper plate and the lower plate, and an outer fastening part may be formed outside the sealing part.

A band-shaped sealing member may be located between the upper plate and the lower plate on which the sealing part is formed.

A coupling groove that complements the coupling between the upper plate and the lower plate may be formed inside the sealing part.

A coupling fastening part may be formed in at least a part of the coupling groove.

A ring-shaped sealing member may be located between the upper plate and the cover film on which the coupling fastening part is formed.

A flow path forming groove that guides the flow of cooling water may be formed in the cooling member.

A flow path forming fastening part is formed in a part of the flow path forming groove, and a ring-shaped sealing member may be located between the upper plate and the cover film on which the flow path forming fastening part is formed.

An anti-deformation groove that prevents shape deformation due to the inflow of cooling water may be formed in the cooling member.

An anti-deformation fastening part is formed in a part of the anti-deformation groove, and a ring-shaped sealing member may be located between the upper plate and the cover film on which the anti-deformation fastening part is formed.

A groove is formed in the cooling member, the groove includes a coupling groove that complements the coupling of the upper plate and the lower plate, a flow path forming groove that guides the flow of cooling water, or an anti-deformation groove that prevents shape deformation due to the inflow of cooling water, wherein a clinching coupling may be formed in at least a part of the grooves.

The cooling member further includes an in-out port for injecting cooling water into an inner space between the upper plate and the lower plate, the in-out port is connected to an external heat exchanger, and cooling water of the cooling member may be circulated through the in-out port.

According to another embodiment of the present disclosure, there is provided a battery module comprising the cooling member as set forth above.

According to yet another embodiment of the present disclosure, there is provided a battery pack comprising the cooling member as set forth above.

The battery pack may include a battery module having a module-less structure.

### [Advantageous Effects]

According to some embodiments, the cooling member can be designed so as to include various materials by applying a mechanical fastening method.

Also, according to some embodiments, when ignition occurs inside the battery module 100 or the battery pack 1000, the cooling member can open a part thereof and inject cooling water to a proper place at a proper time, thereby being able to quickly suppress an internal fire in the battery module 100 or battery pack 1000 and preventing a cascading thermal runaway phenomenon.

The effects of the present disclosure are not limited to the effects mentioned above and additional other effects not mentioned above will be clearly understood from the detailed description and the appended drawings by those skilled in the art.

### [BRIEF DESCRIPTION OF THE DRAWINGS]

Fig. 1 is a perspective view showing a cooling member according to one embodiment of the present disclosure;
Fig. 2 is a perspective view of a lower plate included in a cooling member according to one embodiment of the present disclosure;
Fig. 3 is a partially enlarged view of the cooling member of Fig. 1;
Fig. 4 is a diagram showing a cross section A-A of Fig. 3;
Fig. 5 is a photograph showing a clinching coupling applied to a cross section B-B of Fig. 3;
Fig. 6 is a diagram showing the process of forming the cross-sectional structure of Fig. 5;
Fig. 7 is a top view showing the positions of the recessed parts formed in a cooling member according to one embodiment of the present disclosure;
Fig. 8 is a perspective view showing a cooling member according to another embodiment of the present disclosure;
Fig. 9 is a perspective view showing the positions of the fastening parts in the cooling member of Fig. 8;
Fig. 10 is a partially enlarged view of the cooling member of Fig. 8;
Fig. 11 is a diagram showing a lower plate included in the cooling member of Fig. 8;
Fig. 12 is a diagram showing the coupling of a lower plate and a cover film included in the cooling member of Fig. 8;
Fig. 13 is a diagram showing a cross section C-C of the cooling member of Fig. 8;
Fig. 14 is an exploded perspective view showing a battery pack according to still another embodiment of the present disclosure; and
Fig. 15 is a perspective view of a battery module included in the battery pack according to Fig. 14.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of some layers and areas are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, since the upper surface/lower surface of a specific member can be determined differently depending on which direction is used as a reference direction, the 'upper surface' or 'lower surface' as used herein is defined as meaning two surfaces facing each other on the z-axis of the member.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

A cooling member according to one embodiment of the present disclosure will be described below.

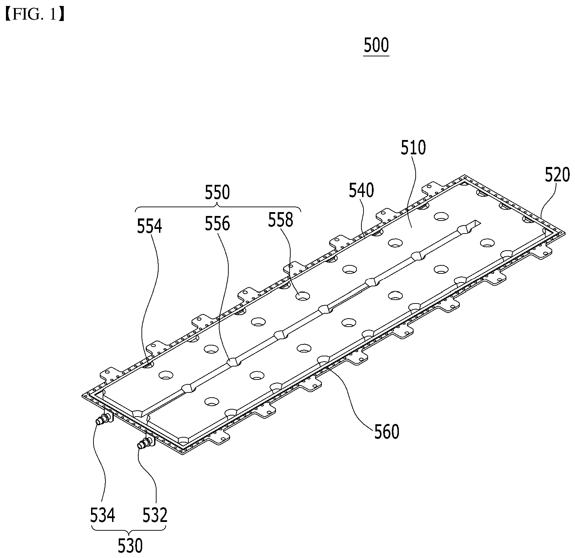

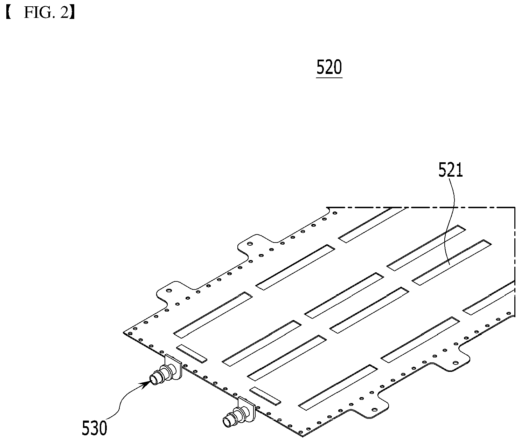

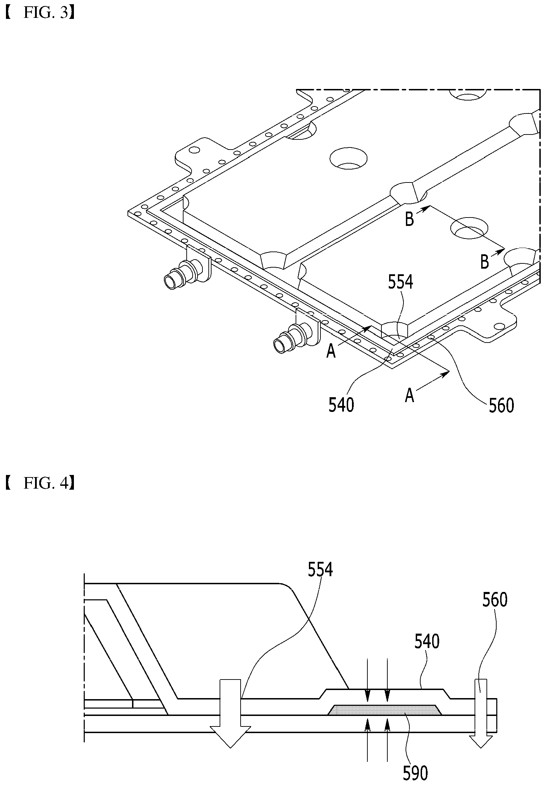

Fig. 1 is a perspective view showing a cooling member according to one embodiment of the present disclosure. Fig. 2 is a perspective view of a lower plate included in a cooling member according to one embodiment of the present disclosure. Fig. 3 is a partially enlarged view of the cooling member of Fig. 1. Fig. 4 is a diagram showing a cross section A-A of Fig. 3.

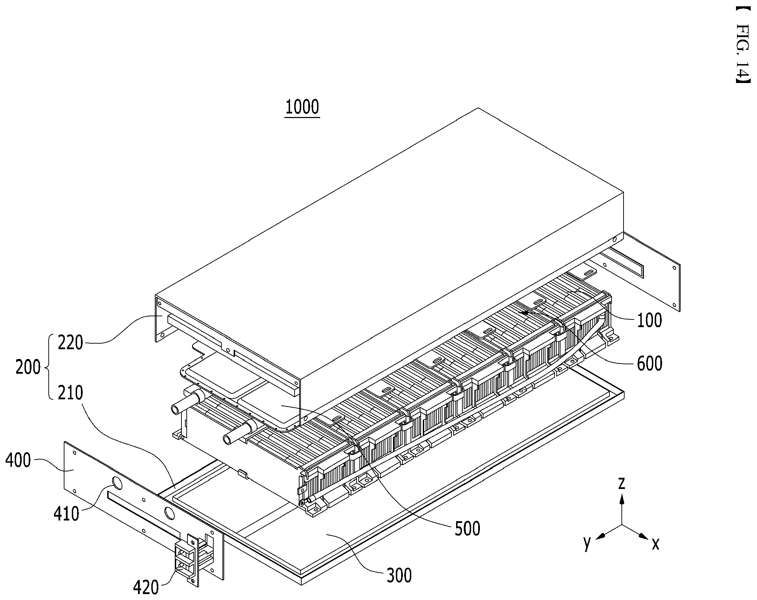

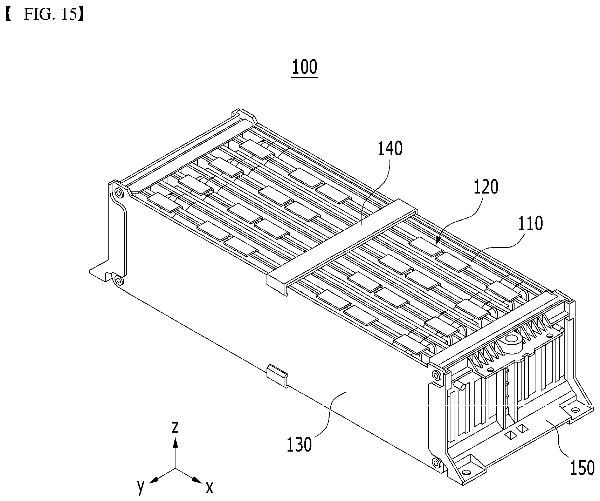

Referring to Fig. 1, the cooling member 500 of the present embodiment may be provided to lower the internal temperature of a battery module including battery cells 100 (see Fig. 15) or a battery pack 1000 (see Fig. 14). The cooling member 500 may be a water-cooled cooling member 500 into which refrigerant or cooling water is injected. The cooling member 500 is provided in a water-cooled manner, so that the cooling efficiency of the cooling member 500 can be maintained uniformly, and the battery cells in the battery module 100 or the battery pack 1000 can be evenly cooled. At this time, the cooling water used in the cooling member 500 may be one of known ones or a mixture thereof. Any known ones can be used as long as they can dissipate the heat of the battery cells by moving along the flow path inside the cooling member 500.

The cooling member 500 may be disposed on one surface of the battery cell stack to dissipate the heat of the battery cells. The cooling member 500 may be disposed parallel to the stacking direction of the battery cell stack so as to be located close to the plurality of battery cells of the battery cell stack. Specifically, the cooling member 500 may be located at the upper part of the battery cell stack. However, this is not necessarily the case, and depending on the design, the cooling member 500 may be located at the lower part of the battery cell stack or may be located at the side part thereof.

The size of the cooling member 500 may be matched with the size of the battery cell stack to which the cooling member 500 is applied. In one example, the cooling member 500 may be provided so as to correspond to one battery cell stack, wherein the length of the cooling member 500 may be matched with the length of the battery cell stack, or may be formed larger or smaller with a slight margin, and the width of the cooling member 500 may be matched with the width of the battery cell stack, or may be formed larger or smaller with a slight margin. In another example, the cooling member 500 may be provided so as to correspond to a plurality of battery cell stacks, wherein the length and width of the cooling member 500 may be matched with the length and width of the plurality of battery cell stacks, or may be formed larger or smaller with a slight margin. Here, the cooling member 500 may be located in an inner part of the battery module 100, but it can also be located inside the battery pack 1000 from the outer port of the battery module 100.

The cooling member 500 may include an upper plate 510 and a lower plate 520 that form the outer shape of the cooling member 500, and inlet/outlet ports 530 that inject cooling water into the cooling member 500.

The cooling member 500 may be formed by coupling the edges of the upper plate 510 and the lower plate 520. A sealing part 540, which is formed by coupling the edges of the upper plate 510 and the lower plate 520 of the cooling member 500, may be located at the edge of the cooling member 500. Cooling water may be contained or circulated between the upper plate 510 and the lower plate 520 coupled in the cooling member 500. A sealing member 590 described below may be located between the upper plate 510 and the lower plate 520 on which the sealing part 540 is formed.

The cooling water may be supplied through the inlet port 532, and discharged through the outlet port 534. It can be designed such that the cooling water in the cooling member 500 circulates continuously by being connected to an external heat exchanger connected to the inlet/outlet ports 530 in order to maintain its temperature homeostasis.

The inlet port 532 and the outlet port 534 may be arranged in a line and in parallel on one end side of the cooling member 500. This may be for simplifying the design of the inflow and outflow of cooling water supplied from the outside of the battery module 100 or the battery pack 1000. Further, this may be for minimizing a temperature difference between the inlet port 532 and the outlet port 534. Specifically, cooling water flowed into the inlet port 532 may have the lowest temperature, and cooling water discharged through the outlet port 534 may have the highest temperature. Therefore, when the inlet/outlet ports 530 are arranged adjacent to each other, mutual heat exchange can occur, thereby minimizing the temperature deviation of the entire cooling water flowing in the inner space of the cooling member. By arranging the inlet/outlet ports 530 side by side, the cooling member 500 can have uniform heat dissipation performance as a whole.

The upper plate 510 is provided in a plate shape, but it may be formed such that the center part thereof is recessed or depressed to have a step difference from the edge part. Specifically, the upper plate 510 may have a recessed shape on the basis of a cross section in the width direction. This may be for forming an internal space through a step so that the upper plate 510 stores the cooling water. Here, the width direction of the upper plate 510 may be a direction parallel to the short side of the top plate 510.

The lower plate 520 may have a shape wholly similar to that of the upper plate 510. The lower plate 520 is also provided in a plate shape, but it may be formed such that the central part thereof is recessed or depressed to have a step difference from the edge part. The lower plate 520 may have a recessed shape on the basis of a cross section in the width direction, thereby forming an internal space that stores the cooling water. Here, the width direction of the lower plate 520 may be a direction parallel to the short side of the lower plate 520.

Referring to Fig. 2, the lower plate 520 may include at least one opening 521. The opening 521 may be a passage for charging cooling water into the battery cell when ignition occurs inside the battery cell. A plurality of openings 521 may be provided along a short side or a long side of the lower plate 520, and the cooling member 500 has a plurality of openings 521, so that cooling water can be charged in response to a fire occurring at an unspecified position within the battery module 100 or the battery pack 1000.

When the cooling member 500 is provided at an upper part of the battery cell, the lower plate 520 may be a part of the cooling member 500 that is located closest to the battery cell. Therefore, the lower plate 520 may be preferably provided with a material having high thermal conductivity to facilitate heat dissipation of the battery cells. Further, in order to improve the overall heat dissipation performance of the cooling member 500, the upper plate 510 of the cooling member 500 may also be provided with a material having high thermal conductivity. The upper plate 510 and the lower plate 520 forming the outer shape of the cooling member 500 may be made of metal with high stiffness, and specific examples thereof include aluminum, gold, silver, copper, platinum, or alloys including these.

The lower plate 520 may be made from one material, but may be made from two or more materials. Since the opening 521 of the lower plate 520 must be closed until internal ignition occurs, a member that melts at a predetermined temperature or higher or breaks at a predetermined pressure or higher may be filled or inserted into the opening 521 of the lower plate 520. Alternatively, a film-type member made to have similar physical properties is attached to the upper surface of the lower plate 520, so that the opening 521 can be closed.

A member used for closing the opening 521 may be made from a material that is more easily melted by heat or broken by pressure than the lower plate 520. For example, a member used for closing the opening 521 may be made from a material having a melting point of 300°C or lower. A member used for closing the opening 521 may be made from a thermoplastic polymer resin having a melting point of 200°C or lower. Examples of the thermoplastic polymer resin include materials with a melting point of about 100°C or more and 200°C or less, such as high density polyethylene (HDPE), polyethylene (PE), polypropylene (PP), polyphenylene oxide (PPO), or the like.

Meanwhile, the upper plate 510 or the lower plate 520 is made from two or more materials as described above, so that the cooling member 500 may include two or more materials having different physical properties. Alternatively, the upper plate 510 and the lower plate 520 may be made from materials having different physical properties, or other members having different physical properties may be added between the upper plate 510 and the lower plate 520. Conventionally, the upper plate 510 and the lower plate 520 of the cooling member 500 are mainly joined by brazing, laser welding or the like, whereby when the cooling member 500 is designed to include two or more materials, one material may be deformed during the welding process, which causes a problem that the welding process is made difficult or impossible. Further, when using laser welding or the like, a local temperature gradient may be formed on the upper plate 510 or the lower plate 520, which causes a problem that at least a part of the upper plate 510 or the lower plate 520 is warped.

However, since the cooling member 500 of the present embodiment is manufactured by a mechanical fastening method rather than a welding method, it can be manufactured so as to include two or more materials unlike the conventional method. Specifically, the mechanical fastening method of the present embodiment can minimize damage to the material forming the cooling member 500 by applying no heat or applying heat at a temperature lower than the melting point of the material provided to the cooling member 500. Therefore, since various materials can be used for the cooling member 500 of the present embodiment regardless of the welding temperature, the design of the cooling member 500 can be easier and more diverse.

One example of a mechanical fastening method used for the cooling member 500 may include a rivet or the like, which is a coupling via a fastening member. In the present embodiment, the cooling member 500 may include a fastening part 560. The fastening part 560 may refer to a part that is fastened with a fastening member such as a rivet in the cooling member 500. A fastener into which a fastening member can be inserted may be formed in the fastening part 560.

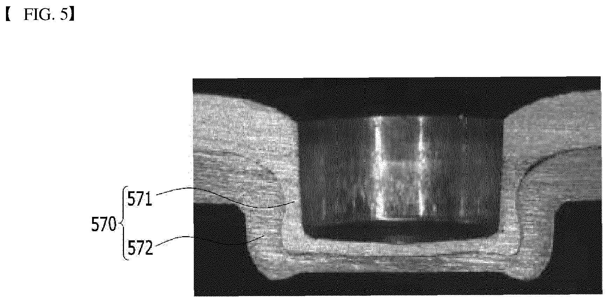

Other examples of the mechanical fastening method used for the cooling member 500 is clinching. Clinching is a deformation joining method that presses one surface of two laminated plate-like members using a punch or the like and deforms the shape thereof, thereby mechanically coupling the two members. Clinching may also be referred to as penetration joining in consideration of its shape. The portion where the clinching is formed may be referred to as a recessed part 570 (see Fig. 5).

When the mechanical fastening method is applied instead of the welding coupling method at the time of manufacture of the cooling member 500, excessive heat is not generated during the manufacturing process, so that unintentional deformation of the cooling member 500 can be minimized, and a difference between the pre-designed dimensions and the final product dimensions can be reduced, thus securing dimensional stability. In particular, in the case of the aluminum material that has been mainly used for the cooling member 500, it can start to deform when a temperature of 660°C or higher, which is the melting point, is applied, but when the mechanical fastening method described above is applied, heat higher than the melting point is not applied to the cooling member 500, so that the dimensional stability of the cooling member 500 can be further improved.

Referring to Figs. 1 and 3, a plurality of grooves 550 may be formed in the cooling member 500. The groove 550 may include a coupling groove 554 that is located inside the sealing part 540 to thereby complement the coupling of the upper plate 510 and the lower plate 520, a flow path forming groove 556 that guides the flow of cooling water, or an anti-deformation groove 558 that prevents deformation of the cooling member 500 due to the inflow of cooling water.

Here, the groove 550 may be formed beforehand at the upper plate 510. Alternatively, it may be formed by a process such as clinching after the upper plate 510 and the lower plate 520 are coupled. Therefore, the groove 550 is not necessarily formed beforehand at the upper plate 510 provided at the time of manufacture of the cooling member 500. Further, here, even if the groove 550 is formed beforehand at the upper plate 510, the clinching coupling can be formed by pressing the groove 550, and thus, the groove being formed beforehand at the upper plate 510 does not exclude that a clinching coupling of that part can be formed.

The coupling groove 554 is located inside the sealing part 540 and can prevent the opening between the upper plate 510 and the lower plate 520 due to excessive pressure being applied to the sealing part 540 by cooling water. The coupling groove 554 is for complementing the stiffness of the sealing part 540 and may be formed at a position corresponding to the vertices of the sealing part 540 to which excessive pressure is likely to be applied. Further, the coupling groove 554 may be arranged at intervals along the edge of the sealing part 540. The shape of the coupling groove 554 may be formed in a fan shape or a semicircular shape with a central angle of 90 degrees in consideration of the shape of the sealing part 540, but this is not necessarily the case.

A flow path forming groove 556 may be formed in the cooling member 500. The flow path forming groove 556 can be provided in the cooling member 500, thereby determining the flow of cooling water provided to the cooling member 500. The flow path forming groove 556 can be formed in plural numbers, and the plurality of flow path forming grooves 556 may be located along a straight line parallel to the longitudinal direction of the cooling member 500. The flow path forming groove 556 may be formed in a circular shape, but this is not necessarily the case, and may be formed in a square, triangular or other graphic shape. A straight groove connecting them can be further provided at the position where the flow path forming groove 556 is formed in the cooling member 500.

The flow path forming grooves 556 may be continuously formed along the longitudinal direction of the cooling member 500 at the center of the cooling member 500 except for a predetermined section, so that the flow of cooling water can be formed in a U shape. The flow of cooling water injected through the inlet port 532 of the cooling member 500 may be restricted by the flow path forming groove 556. As the cooling water flows along the U-shape, the cooling water injected through the inlet port 532 can be discharged to the outlet port 534 located in parallel with the inlet port 532. Specifically, the U-shaped flow path through which the cooling water flows may include a first flow path extending from the inlet port 532 along a straight line parallel to the longitudinal direction of the cooling member 500, a second flow path extending along a curve that rotates clockwise or counterclockwise at the end of the first flow path, and a third passage extending from the end of the second flow path toward the outlet port 534 along a straight line parallel to the longitudinal direction of the cooling member 500.

An anti-deformation groove 558 may be formed in the cooling member 500. The anti-deformation groove 558 is provided in the cooling member 500, thereby being able to prevent shape deformation of the cooling member 500 by the cooling water. For example, when cooling water is injected into the cooling member 500, the injected cooling water may be concentrated in the 1/2 space of the cooling member 500 by the flow path forming groove 556 that crosses the center. Until the cooling water moves through the U-shaped flow path to the remaining 1/2 space, a large pressure can act on that space, so that at least a part of the cooling member 500 may expand or the cooling member 500 may be damaged. When the anti-deformation groove 558 is formed in the flow path of the cooling member 500, the cooling water is temporarily concentrated, whereby even if a high pressure acts on a specific section, deformation caused therefrom can be minimized. The anti-deformation grooves 558 may be partially disposed at intervals in the U-shaped flow path through which cooling water flows in the cooling member 500. The anti-deformation groove 558 may be located between the flow path forming groove 556 and the sealing part 540 in the width direction of the cooling member 500. The specific position of the anti-deformation groove 558 may be appropriately set so as to correspond to the flow rate and flow rate of the cooling water without excessively obstructing the cooling water flowing in through the inlet port 532. The anti-deformation groove 558 may be mainly formed in a circular shape, but this is not necessarily the case, and it may be formed in a square, triangular, or other graphic shape. Here, the width direction of the cooling member 500 may be a direction parallel to the short side of the cooling member 500. Further, here, the longitudinal direction of the cooling member 500 may be a direction parallel to the long side of the cooling member 500.

In addition, protrusions extending from one side of the cooling member 500 and located continuously along the longitudinal direction of the cooling member 500 may be formed in the periphery of the cooling member 500. The protrusions can be in contact with or disposed adjacent to the electrode leads of each battery cell stack or the busbars connected to the electrode leads. The electrode lead or busbar that provides electrical connections in the battery module 100 or battery pack 1000 has a structure that easily generates heat, and therefore, when the above-mentioned protrusion promotes heat dissipation of the electrode lead or the busbar, the temperature rise of the battery cell can be more effectively prevented.

The fastening part 560 is located outside the sealing part 540 and is formed continuously along the edge of the sealing part 540, thereby allowing the coupling of the upper plate 510 and the lower plate 520 to be firmly formed. The fastening part 560 is located outside the sealing part 540, so that the fastening part 560 can supplement the stiffness of the sealing part 540 without directly damaging the sealing member 590. The number of fastening parts 560 may be formed differently according to the size of the cooling member 500 and the size of the fastening member.

Meanwhile, unlike those mentioned above, it is also possible to apply a clinching coupling method instead of a coupling method by a fastening member to the position where the fastening part 560 is formed. In this case, the recessed part 570 may be formed on both the inside and outside of the sealing part 540 by a clinching coupling method, and the durability of the sealing part 540 can be complemented by the two recessed parts 570. However, since the recessed part 570 is usually formed larger than the fastening part 560, applying the recessed part 570 to the outside of the sealing part 540 can reduce the space for storing cooling water. Therefore, it may be more preferable to apply the fastening part 560 to the outside of the sealing part 540 rather than applying the recessed part 570.

Referring to Fig. 4, in order to further improve the watertightness between the upper plate 510 and the lower plate 520, a sealing member 590 may be located between the upper plate 510 and the lower plate 520. When applying a conventional welding method, it was difficult to provide the sealing member 590, which is slightly fragile to heat, at the time of coupling the upper plate 510 and the lower plate 520. Therefore, when applying the welding process, in order to complement the watertightness of the welding surface, the upper plate 510 and the lower plate 520 are mainly coupled, and then a sealant or the like is applied through an additional process. However, since the cooling member 500 according to the present embodiment is formed by a mechanical coupling method, the thermally fragile sealing member 590 can be joined together during the coupling process of the upper plate 510 and the lower plate 520, thereby achieving simplification of the manufacturing process, reduction of manufacturing costs, and the like.

The sealing member 590 may be provided to the sealing part 540. The sealing member 590 is provided on inner surfaces of the upper plate 510 and the lower plate 520 and may be in contact with the upper plate 510 and the lower plate 520. The sealing member 590 can improve watertightness of the upper plate 510 and the lower plate 520. The sealing member 590 is compressed by an external force in the coupling of the upper plate 510 and the lower plate 520, thereby being able to fill a gap between the upper plate 510 and the lower plate 520. The sealing member 590 can prevent the cooling water inside the cooling member 500 from flowing out to the outside through the gap. Here, the sealing member 590 may also be referred to as a water pad.

The sealing member 590 may be made from a flexible material having elasticity. The sealing member 590 may include a silicone-based foam pad, an acrylic-based foam pad, a urethane-based foam pad, or the like as an example of materials to be manufactured.

As shown in Fig. 4, a sealing member 590 is located in the sealing part 540, a fastening part 560 is formed on the outside of the sealing part 540, and a coupling groove 554 is formed on the inside, thereby being able to improve a sealing force between the upper plate 510 and the lower plate 520. In addition, as will be described later, because a recessed part 570 is formed by clinching coupling in the coupling groove 554, the sealing force is further increased. In this manner, through the sealing member 590, the coupling groove 554, the fastening part 560 or the recessed part 570, the watertightness of the cooling member 500 is improved and leakage of the cooling water can be prevented.

Next, a clinching coupling among mechanical coupling methods applied to the cooling member 500 will be described in more detail with reference to the figures.

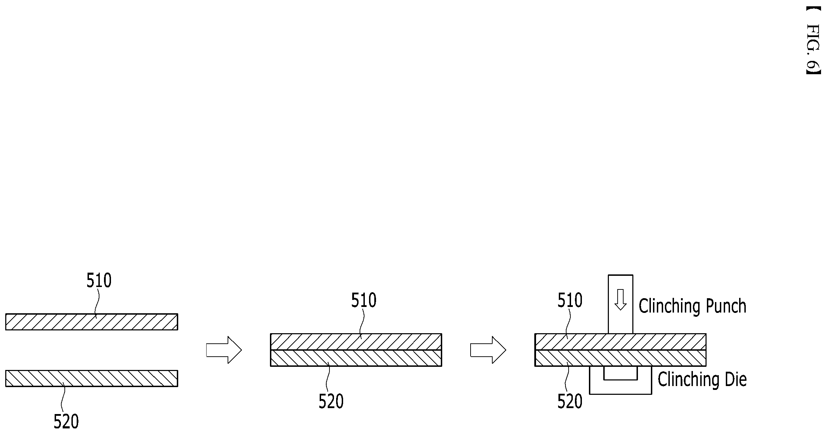

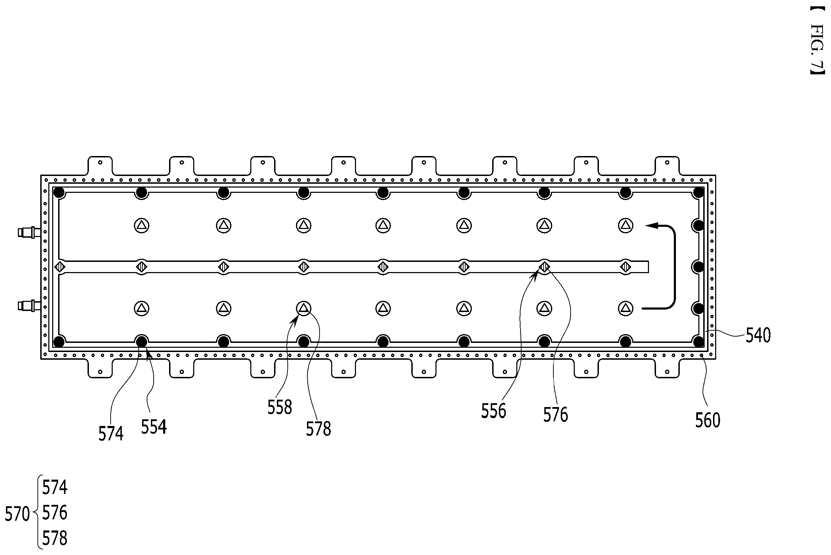

Fig. 5 is a photograph showing a clinching coupling applied to a cross section B-B of Fig. 3. Fig. 6 is a diagram showing the process of forming the cross-sectional structure of Fig. 5. Fig. 7 is a top view showing the positions of the recessed parts formed in a cooling member according to one embodiment of the present disclosure.

Referring to Figs. 5 and 6, a punch and die forming a pair may be used to form a clinching coupling. A recess having a shape corresponding to the punching outline may be formed in the die. When the workpiece is placed between punching and die, the punch moves toward the die, so that a part of the workpiece can be deformed to match with the shape of the punch and the recess of the die. If the workpiece consists of two or more layers, two or more layers can be mechanically coupled through the above-mentioned modification.

Through the clinching coupling, a part of the upper plate 510 and the lower plate 520 may include a recessed part 570 that is recessed in one direction. The recessed part 570 may be a part that is integrally recessed along the pressing direction by pressing a part of the upper plate 510 or the lower plate 520. The formation of the recessed part 570 allows the upper plate 510 and the lower plate 520 to be physically coupled. Here, the pressing direction may be a direction from the upper plate 510 toward the lower plate 520, or may also be a direction from the lower plate 520 toward the upper plate 510.

In a specific example, two surfaces of the upper plate 510 may be referred to as a first surface and a second surface, and two surfaces of the lower plate 520 may be referred to as third and fourth surfaces. Based on the first direction from the upper plate 510 toward the lower plate 520, the first surface to the fourth surface may be located in the order of the first surface, the second surface, the third surface, and the fourth surface. The first surface of the upper plate 510 and the fourth surface of the lower plate 520 may form an outer surface of the cooling member 500, and the second surface of the upper plate 510 and the third surface of the lower plate 520 may face each other.

Here, when the first surface of the upper plate 510 is partially pressed, the first surface may be recessed in a first direction to have a predetermined depth and may be formed in a concave shape. Here, the upper plate 510 is pressed, so that the lower plate 520 located under the upper plate 510 can be deformed together, and the upper plate 510 and the lower plate 520 can be physically deformed by pressing, thereby being integrally coupled. Here, on the basis of the lower plate 520, the recessed part 570 may be described as protruding and forming in a convex shape.

Referring to the picture of Fig. 5, the upper plate 510 and the lower plate 520 may be recessed by pressing, respectively, wherein the recessed part formed in the upper plate may be referred to as an upper recessed part 571, and the recessed part formed in the lower plate 520 may be referred to as a lower recessed part 572. When the upper plate 510 is pressed, an upper recessed part 571 may be formed, and the upper recessed part 571 may be introduced into lower plate 520 to thereby form a lower recessed part 572.

The recessed part 570 is recessed to thereby have a depth, and a depth direction of the recessed part 570 may be perpendicular to a direction in which the cooling water inside the cooling member 500 flows. Here, the depth direction may be the pressing direction described above. The recessed part 570 can be formed to have a depth, so that the coupling between the upper plate 510 and the lower plate 520 can be strongly formed, and the distance between the upper plate 510 and the lower plate 520 can be prevented from slightly widening according to the pressure within the cooling member 500. Further, the recessed part 570 can obstruct the flow of cooling water even if the distance between the upper plate 510 and the lower plate 520 is slightly widened, thereby preventing the cooling water from flowing out to the outside of the cooling member 500 beyond the sealing part 540.

Here, the lowest point of the first surface where the recessed part 570 is formed may be located under the region where the recessed part 570 is not formed, that is, the highest point of the third surface or the highest point of the fourth surface. In this manner, when part of the upper surface (first surface) of the upper plate 510 is deformed so as to be located lower than the upper surface (third surface) or lower surface (fourth surface) of the lower plate 520 through the clinching process, the upper plate 510 is completely introduced into the lower plate 520, so that the coupling between the upper plate 510 and the lower plate 520 can be formed more stably.

The depth of the recessed part 570 may be larger than the thickness of the upper plate 510, the lower plate 520, or a combination thereof. If the depth of the recessed part 570 is too small, it may be difficult to ensure watertightness between the upper plate 510 and the lower plate 520. If the depth of the recessed part 570 is too large, the upper plate 510 and the lower plate 520 may be excessively deformed or partially cut. For example, when the sum of the thickness of the upper plate 510 and the thickness of the lower plate 520 in the portion where the recessed part 570 is not formed is 100, the depth of the recessed part 570 may have a value of 50 or more, or 50 to 200. However, the above values are for illustrative purposes only and are not intended to limit the depth of the recessed part 570 of the present disclosure. Here, the depth of the recessed part 570 may be based on the upper recessed part 570, and specifically, it may be the depth that the first surface of the upper recessed part 570 has based on the upper plate 510 in which the recessed part 570 is not formed.

The depth of the upper recessed part 571 may be larger than that of the lower recessed part 572. This may be because, when pressed along the first direction, the upper recessed part 571 is located on the inner side of the recessed part 570 than the lower recessed part 572, so that the upper recessed part 571 forming the inner diameter must be deformed more than the lower recessed part 572 forming the outer diameter. During the process of forming the upper recessed part 571 and the lower recessed part 572 through pressing, the upper plate 510 and the lower plate 520 decrease in thickness value as the area increases. However, the upper recessed part 571 must deform to accept both the thickness changes of the upper plate 510 and the lower plate 520, and thus may have been formed to have a greater depth. Meanwhile, the first direction is for illustrating the pressing direction, and thus, when the upper plate 510 and the lower plate 520 are pressed along the second direction opposite to the first direction, the lower recessed part 572 is located inside, so that the depth of the lower recessed part 572 may have a greater value than the depth of the upper idented part 571.

The recessed partn 570 may have a shape in which the end is slightly widened in a depth direction. The lowermost end (lowest end) of the upper recessed part 571 may have a slightly larger diameter than other parts of the upper recessed part 572. The lowermost end (lowest end) of the lower recessed part 572 may have a slightly larger diameter than other parts of the lower recessed part 572. Here, the maximum value of the outer diameter of the upper recessed part 571 may be larger than the minimum value of the inner diameter of the lower recessed part 572, whereby a hooking coupling may be formed between the upper recessed part 571 and the lower recessed part 572. Therefore, even if pressure acts between the upper recessed part 571 and the lower recessed part 572 according to the internal pressure of the cooling member 500, the space between the upper plate 510 and the lower plate 520 may not be widened due to the above hooking coupling. In this manner, depending on the shape of the upper recessed part 571 and the lower recessed part 572, the coupling strength of the recessed part 570 can be further improved.

At this time, the punch may also press the recessed part 570 again to arrange the shape of the recessed part 570. The re-pressing can allow the recessed part 570 to be crushed, or deformed such that the depth of the recessed part 570 is reduced. Here, the diameter of the die may be one having a larger diameter recess than the previously used die. However, re-pressing the recessed part 570 may cause damage to the recessed part 570, and thus, the above-mentioned re-pressing process should be applied in consideration of the physical properties, size and like of the recessed part 570.

The outer diameter of the recessed part 570, that is, the outer diameter of the lower recessed part 572 may have a value of 5 to 11 mm, 7 to 9 mm, or 7.5 to 8.5 mm. If the diameter of the recessed part 570 is too small, it may be difficult for the upper plate 510 and the lower plate 520 to firmly couple with each other due to the recessed part 570. If the diameter of the recessed part 570 is too large, deformation of the upper plate 510 and the lower plate 520 due to the recessed part 570 may be excessive, and thus, the dimensional stability of the cooling member 500 can be reduced. Further, the diameter of the recessed part 570 may be differently designed according to the distance between the recessed parts 570.

At this time, since the diameter of the recessed part 570 may vary depending on the diameter of the die, the outer diameter of the lower recessed part 572 described above may correspond to the inner diameter of the recess of the die. In addition to the diameter of the recessed part 570, the shape of the recessed part 570 may be determined in accordance with the shape of the punch or die used in the clinching process. For example, when the cross section of the punch is circular, the recessed part 570 may be formed in a tubular shape as a whole, and when the cross section of the punch is in a square shape, the recessed part 570 may be formed in a square tubular shape as a whole.

In the above, the case in which the first surface is pressed in the first direction to form the recessed part 570 has been described. However, this is an example in which the recessed part 570 is formed, and the fourth surface is pressed along the second direction to form the recessed part 570. Even if the recessed part 570 is pressed along the second direction, it can be fully understood through the above description, and thus, a detailed description thereof will be omitted.

Meanwhile, through the pressing process described above, the sealing member 590 provided as an elastic body may be compressed and thus reduced in thickness. Through the pressing process, not only the thickness of the sealing member 590 is reduced, but also the thicknesses of the upper plate 510 and the lower plate 520 may be partially deformed. The lowest point of the recessed part 570 may be the part that is pressed by the punch and receives the greatest pressure, whereby the lowest point of the recessed part 570, that is, the thickness value of the most deeply recessed part may be smaller than the thicknesses of other parts. The part corresponding to the punch before forming the recessed part 570 is pressed by the pressure of the punch, so that the side part from the highest point to the lowest point of the recessed part 570 must be formed. Therefore, as the area is increased by the pressure of the punch, the overall thickness may be reduced.

Referring to Fig. 7, a clinching fastening method may be applied to the groove 550 of the cooling member 500 according to the present embodiment. This may be a method in which a clinching coupling is applied to already formed grooves 550, or a method in which the grooves 550 of the cooling member 500 is formed through a clinching coupling. Here, the clinching coupling formed in the coupling groove 554 is referred to as a first recessed part 574, the clinching coupling formed in the flow path forming groove 556 is referred to as a second recessed part 576, and a clinching coupling formed in the anti-deformation groove 558 may be referred to as a third recessed part 578. In Fig. 7, the position of the first recessed part 574 is shown in a circular shape, the position of the second recessed part 576 is shown in a diamond or square shape, and the position of the third recessed part 578 is shown in a triangular shape.

When the flow path forming groove 556 and the anti-deformation groove 558 are formed through the clinching fastening method described above, it can have advantages such as simplification of the manufacturing process and reduction of manufacturing cost as compared with the case of using the conventional coupling method. In the manufacturing method of the cooling member 500 using the conventional welding method, a separate manufacturing process had to be added to form a flow path or an anti-deformation structure, and in forming the flow path or the anti-deformation structure, it had to be precisely designed beforehand so that dimensional tolerances did not occur. However, since the cooling member 500 of this embodiment is formed with the flow path forming groove 556 or the anti-deformation groove 558 using a clinching process used in the manufacturing process, a separate manufacturing process therefor can be omitted. Further, since the upper plate 510 and the lower plate 520 are partially deformed and coupled, it is possible to have more freedom with respect to dimensional tolerances.

Meanwhile, although not specifically mentioned above, the cooling member 500 according to one embodiment of the present disclosure can be mounted in the battery module 100 or the battery pack 1000.

Next, a cooling member according to another embodiment of the present disclosure will be described.

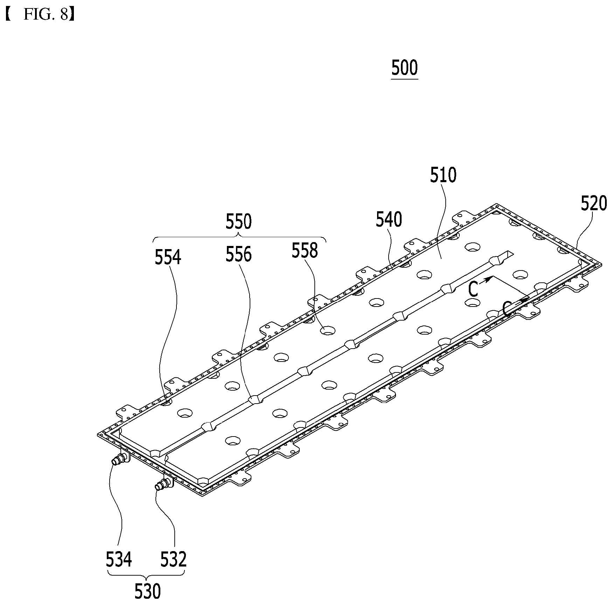

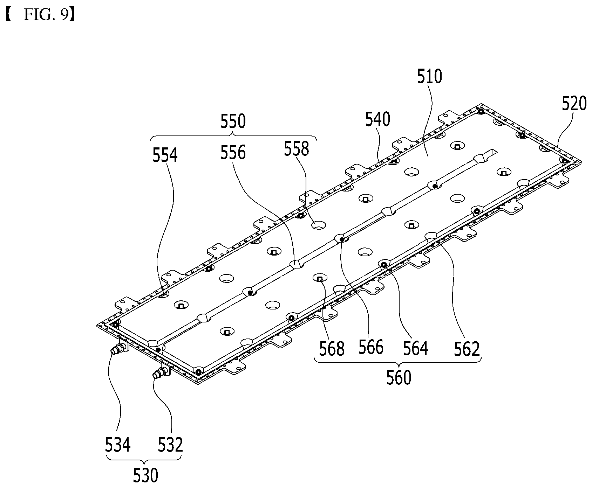

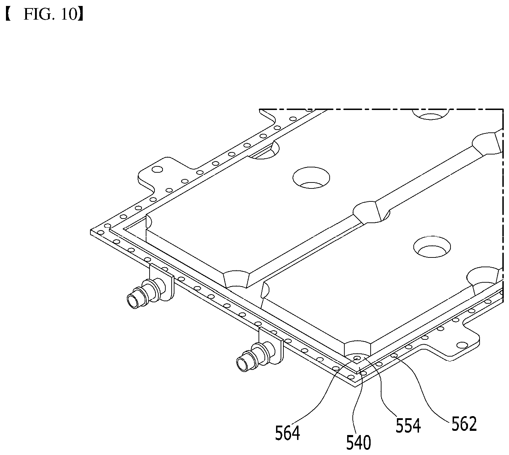

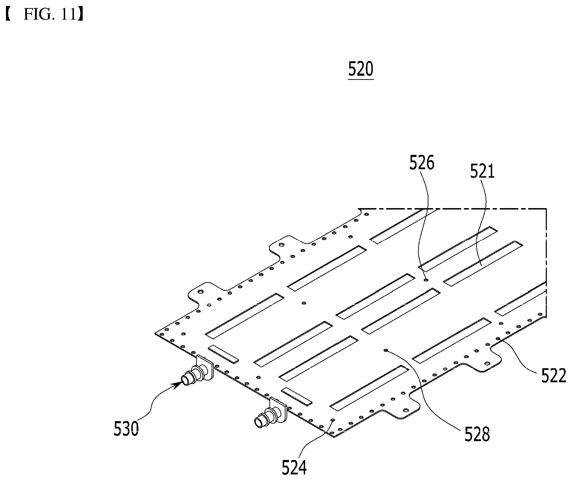

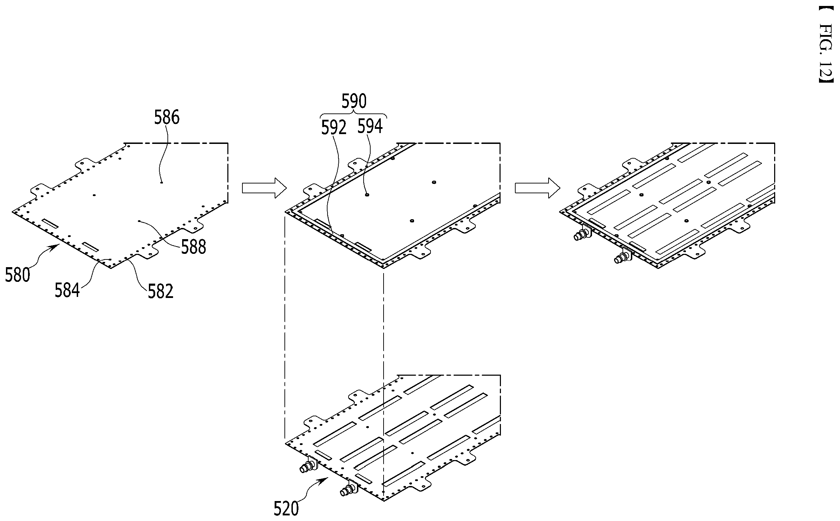

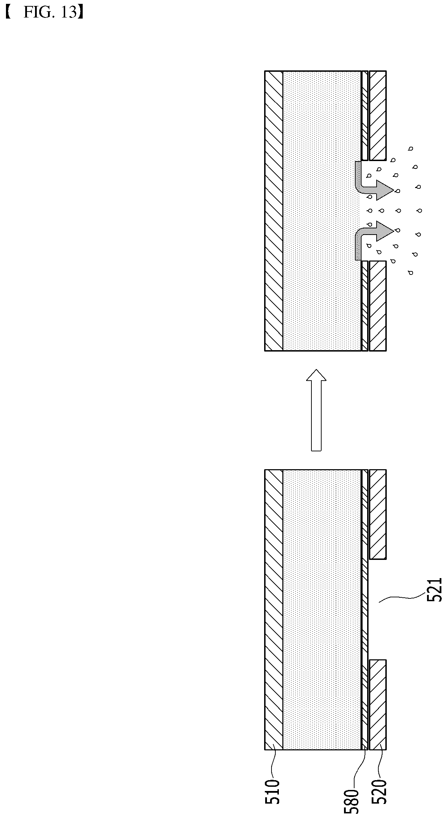

Fig. 8 is a perspective view showing a cooling member according to another embodiment of the present disclosure. Fig. 9 is a perspective view showing the positions of the fastening parts in the cooling member of Fig. 8. Fig. 10 is a partially enlarged view of the cooling member of Fig. 8. Fig. 11 is a diagram showing a lower plate included in the cooling member of Fig. 8. Fig. 12 is a diagram showing the coupling of a lower plate and a cover film included in the cooling member of Fig. 8. Fig. 13 is a diagram showing a cross section C-C of the cooling member of Fig. 8.

The cooling member 500 according to another embodiment of the present disclosure shown in Fig. 8 is not shown in Fig. 8 regarding the outer surface of the cooling member 500, but it further includes a cover film 580 as shown in Fig. 12. Referring to Fig. 8, the cooling member 500 of this embodiment can be provided to lower the internal temperature of the battery module 100 including battery cells or the battery pack 1000. The cooling member 500 may be a water-cooled cooling member 500 into which refrigerant or cooling water is injected. Since the cooling member 500 is provided in a water-cooled manner, the cooling efficiency of the cooling member 500 can be maintained uniformly, and battery cells in the battery module 100 or the battery pack 1000 may be evenly cooled. At this time, the cooling water used in the cooling member 500 may be one of known ones or a mixture thereof. Any known ones can be used as long as they can dissipate the heat of the battery cells by moving along the flow path inside the cooling member 500.

The cooling member 500 may be disposed on one surface of the battery cell stack to dissipate the heat of the battery cells. The cooling member 500 may be disposed parallel to the stacking direction of the battery cell stack so as to be located close to the plurality of battery cells of the battery cell stack. Specifically, the cooling member 500 may be located at the upper part of the battery cell stack (+z-axis direction in Fig. 14). However, this is not necessarily the case, and depending on the design, the cooling member 500 may be located at the lower part (-z-axis direction) of the battery cell stack or may be located at the side part (+/-y-axis direction) thereof.

The size of the cooling member 500 may be matched with the size of the battery cell stack to which the cooling member 500 is applied. In one example, the cooling member 500 may be provided so as to correspond to one battery cell stack, wherein the length of the cooling member 500 is matched with the length of the battery cell stack or is formed larger or smaller with a slight margin, and the width of the cooling member 500 may be matched with the width of the battery cell stack or may be formed larger or smaller with a slight margin. In another example, the cooling member 500 may be provided so as to correspond to a plurality of battery cell stacks, wherein the length and width of the cooling member 500 may be matched with the length and width of the plurality of battery cell stacks or may be formed larger or smaller with a slight margin. Here, the cooling member 500 may be located in an inner part of the battery module 100, but can also be located inside the battery pack 1000 (see Fig. 14) from the outer port of the battery module 100.

The cooling member 500 may include an upper plate 510 and a lower plate 520 that form the outer shape of the cooling member 500, and inlet/outlet ports 530 that inject cooling water into the cooling member 500.

The cooling member 500 may be formed by coupling the edges of the upper plate 510 and the lower plate 520. Cooling water may be contained or circulated between the upper plate 510 and the lower plate 520 coupled in the cooling member 500. A sealing part 540 formed by coupling the edges of the upper plate 510 and the lower plate 520 of the cooling member 500 may be located at the edge of the cooling member 500. A band-shaped sealing member 592 described below may be located between the upper plate 510 and the lower plate 520 on which the sealing part 540 is formed.

The upper plate 510 is provided in a plate shape, but may be formed so that its central part is recessed or indented to have a step difference from the edge port. Specifically, the upper plate 510 may have a recessed shape with respect to a cross section in the width direction. This can be for forming an inner space through a step difference so that the upper plate 510 stores the cooling water. Here, the width direction of the upper plate 510 may be a direction parallel to the short side of the upper plate 510.

The lower plate 520 may have a shape similar to the upper plate 510 as a whole. The lower plate 520 is also provided in a plate shape, but may be formed so that the central part thereof is recessed or indented to have a step difference from the edge part. The lower plate 520 may have a recessed shape on the basis of a cross section in the width direction, thereby forming an inner space for storing the cooling water. Here, the width direction of the lower plate 520 may be a direction parallel to the short side of the lower plate 520.

When the cooling member 500 is provided on the upper part of the battery cell, the lower plate 520 may be a portion located closest to the battery cell in the cooling member 500. Therefore, the lower plate 520 may be preferably made from a material having high thermal conductivity so as to promote heat dissipation of the battery cell. Further, in order to improve the overall heat dissipation performance of the cooling member 500, the upper plate 510 of the cooling member 500 may also be made from a material having high thermal conductivity. The upper plate 510 and the lower plate 520 for forming the outer shape of the cooling member 500 may be made from a metal with high stiffness, and specific examples thereof may include aluminum, gold, silver, copper, platinum, an alloy containing these, or the like.

The cooling water may be supplied through an inlet port 532 disposed, and then discharged to the outlet port 534. The inlet port 532 and the outlet port 534 may be disposed side by side in parallel on one end side of the cooling member 500. This may be for simplifying the design regarding the inflow and discharge of the cooling water supplied from the outside of the battery module 100 or the battery pack 1000. Further, this can be for minimizing the temperature difference between the periphery of the inlet port 532 and the periphery of the outlet port 534. Specifically, the cooling water flowing into the inlet port 532 may have the lowest temperature, and the cooling water discharging to the outlet port 534 may have the highest temperature. Therefore, when the inlet/outlet ports 530 are arranged adjacent to each other, mutual heat exchange occurs, so that a temperature deviation of the entire cooling water flowing through the inner space of the cooling member can be minimized. Therefore, by arranging the inlet/outlet ports 530 side by side, the cooling member 500 can have a uniform heat dissipation performance as a whole.

Meanwhile, the cooling member 500 may include a separate cover film 580 made from a different material between the upper plate 510 and the lower plate 520. The cover film 580 may be made from a material having a lower melting point than the material of the upper plate 510 and the lower plate 520. Conventionally, the upper plate 510 and the lower plate 520 of the cooling member 500 are mainly joined by brazing, laser welding, or the like, and thus, when the cooling member 500 is designed so as to include two or more materials in this way, one material may be deformed during the welding process, which causes a problem that the welding process is made difficult or impossible. Further, when using laser welding or the like, a local temperature gradient may be formed on the upper plate 510 or the lower plate 520, which causes a problem that at least a part of the upper plate 510 or the lower plate 520 is warped.

However, the cooling member 500 of the present embodiment can be manufactured by a mechanical fastening method rather than a welding method. Specifically, the mechanical fastening method of the present embodiment can minimize damage to the material forming the cooling member 500 by applying no heat or applying heat at a temperature lower than the melting point of the material provided to the cooling member 500.

One example of a mechanical fastening method used for the cooling member 500 may include a rivet or the like. In the present embodiment, the cooling member 500 includes a plurality of fastening parts 560, wherein the fastening part 560 may refer to a part that is fastened with a fastening member such as a rivet in the cooling member 500. A fastener into which a fastening member can be inserted may be formed in the fastening part 560.

Other examples of the mechanical fastening method used for the cooling member 500 may include clinching. Clinching is a deformation joining method that presses one surface of two laminated plate-shaped members using a punch or the like and deforms the shape thereof, thereby mechanically coupling the two members. Clinching may also be referred to as penetration joining in consideration of its shape.

When the mechanical fastening method is applied instead of the welding coupling method at the time of manufacture of the cooling member 500 in this way, excessive heat is not generated during the manufacturing process, so that unintentional deformation of the cooling member 500 can be minimized, and a difference between the pre-designed dimensions and the final product dimensions can be reduced, thus securing dimensional stability. In particular, in the case of the aluminum material that has been mainly used for the cooling member 500, it can start to deform when a temperature of 660°C or higher, which is the melting point, is applied, but when the mechanical fastening method described above is applied, heat higher than the melting point is not applied to the cooling member 500, so that the dimensional stability of the cooling member 500 can be further improved.

In addition, if a mechanical fastening method is applied during the manufacturing of the cooling member 500, a specific material fragile to temperature may not be deformed during the manufacturing process. Therefore, structures of various materials and shapes may be applied to the cooling member 500, and the design of the cooling member 500 may be easier and more diverse.

A plurality of grooves 550 may be formed in the cooling member 500. The groove 550 may include a coupling groove 554 that is located inside the sealing part 540 to thereby complement the coupling of the upper plate 510 and the lower plate 520, a flow path forming groove 556 that guides the flow of cooling water, or an anti-deformation groove 558 that prevents deformation of the cooling member 500 due to the inflow of cooling water.

Here, the groove 550 may be formed beforehand at the upper plate 510. Alternatively, it may be formed by a process such as clinching after the upper plate 510 and the lower plate 520 are coupled. Therefore, the groove 550 is not necessarily formed beforehand at the upper plate 510 provided at the time of manufacture of the cooling member 500. Further, here, even if the groove 550 is formed beforehand at the upper plate 510, the clinching coupling can be formed by pressing the groove 550, and thus, the groove being formed beforehand at the upper plate 510 does not exclude that a clinching coupling of that part can be formed.

A plurality of fastening parts 560 may be formed in the cooling member 500. The fastening part 560 may include an outer fastening part 562 located outside the sealing part 540. The fastening part 560 may include a coupling fastening part 564 located inside the sealing part 540, a flow path forming fastening part 566 and an anti-deformation fastening part 568. The number of the coupling groove 554 may be plural, and the coupling fastening part 564 may be formed in at least a part of the coupling groove 554. The number of the flow path forming groove 556 may be plural, and the flow path forming fastening part 566 may be formed in at least a part of the flow path forming groove 556. The number of the anti-deformation groove 558 may be plural, and the anti-deformation fastening part 568 may be formed in at least a part of the anti-deformation groove 558.

Referring to Fig. 9, the position where the fastening part 560 is provided among the grooves 550 of the cooling member 500 of the present embodiment is illustrated. Here, the positions of the outer fastening part 562 and the coupling fastening part 564 are illustrated in a circular frame, the position of the flow path forming fastening part 566 is illustrated in a circular shape, and the position of the shape anti-deformation fastening part 568 is illustrated in a square frame.

Fig. 9 shows a state where the fastening part 560 is generally formed in one of the two grooves 550. That is, Fig. 9 generally shows an example of a cooling member 500 that is designed in which grooves 550 having fastening parts 560 formed therein and grooves 550 having no fastening parts 560 formed therein are alternately disposed. This may be an example in which the fastening part 560 is evenly formed in the groove 550, but the arrangement of the groove 550 and the fastening part 560 of the present disclosure is not limited thereto and may be designed variously.

Referring to Fig. 10, an outer fastening part 562 may be formed on the outside of the sealing part 540 of the cooling member 500, and a coupling groove 554 and a fastening part 564 may be formed on the inside.

The outer fastening part 562 is located outside the sealing part 540 and is formed continuously along the edge of the sealing part 540, thereby allowing the coupling of the upper plate 510 and the lower plate 520 to be firmly formed. The outer fastening part 562 is located outside the sealing part 540, and thus, even when the band-shaped sealing member 592 is located in the sealing part 540, the outer fastening part 562 can complement the stiffness of the sealing part 540 without directly damaging the band-shaped sealing member 592. The number of the outer fastening parts 562 can be formed differently depending on the size of the cooling member 500 and the size of the fastening member.

The coupling groove 554 is located inside the sealing part 540 and can prevent the opening between the upper plate 510 and the lower plate 520 due to excessive pressure being applied to the sealing part 540 by cooling water. The coupling groove 554 is for complementing the stiffness of the sealing part 540 and may be formed at a position corresponding to the vertices of the sealing part 540 to which excessive pressure is likely to be applied. Further, the coupling groove 554 may be arranged at intervals along the edge of the sealing part 540. The shape of the coupling groove 554 may be formed in a fan shape or a semicircular shape with a central angle of 90 degrees in consideration of the shape of the sealing part 540, but this is not necessarily the case.

The coupling fastening part 564 may be complementing the stiffness of the coupling groove 554. The coupling fastening part 564 may be formed in the coupling groove 554 located inside the sealing part 540. The coupling fastening part 564 may be formed in all coupling grooves 554, or may be partially formed in a part of the coupling grooves 554. For example, the coupling fastening part 564 may be formed in the two coupling grooves 554 one to one, i.e., alternately. When the coupling fastening part 564 is partially provided in the coupling groove 554, the coupling fastening part 564 may be preferably formed in the coupling groove 554 corresponding to each vertex of the sealing part 540.

In this manner, an outer fastening part 562 is formed on the outside of the sealing part 540, and a coupling fastening part 564 is formed on the inside, thereby being able to improve a sealing force between the upper plate 510 and the lower plate 520. Through the outer fastening part 562 and the fastening part 564, the watertightness of the cooling member 500 can be improved and leakage of cooling water can be prevented.

A flow path forming groove 556 may be formed in the cooling member 500. The flow path forming grooves 556 can be provided in the cooling member 500, thereby determining the flow of cooling water provided to the cooling member 500. The flow path forming groove 556 can be formed in plural numbers, and the plurality of flow path forming grooves 556 may be located along a straight line parallel to the longitudinal direction of the cooling member 500. The flow path forming groove 556 may be mainly formed in a circular shape, but this is not necessarily the case, and may be formed in a square, triangular or other graphic shape. A straight groove connecting them can be further provided at the position where the flow path forming groove 556 is formed in the cooling member 500.

The flow path forming grooves 556 may be formed continuously along the longitudinal direction of the cooling member 500 at the center of the cooling member 500 except for a predetermined section, so that the flow of cooling water can be formed in a U shape. The flow of cooling water injected through the inlet port 532 of the cooling member 500 may be restricted by the flow path forming groove 556. As the cooling water flows along the U-shape, the cooling water injected through the inlet port 532 can be discharged to the outlet port 534 located in parallel with the inlet port 532. Specifically, the U-shaped flow path through which the cooling water flows may include a first flow path extending from the inlet port 532 along a straight line parallel to the longitudinal direction of the cooling member 500, a second flow path extending along a curve that rotates clockwise or counterclockwise at the end of the first flow path, and a third passage extending from the end of the second flow path toward the outlet port 534 along a straight line parallel to the longitudinal direction of the cooling member 500.

The flow path forming fastening part 566 may be formed in the flow path forming groove 556. The flow path forming fastening part 566 may be for complementing the stiffness of the flow path forming groove 556. The flow path forming fastening part 566 may be formed in all of the flow path forming grooves 556, or may be partially formed in a part of the coupling grooves 554. For example, the coupling fastening part 564 may be formed in the two coupling grooves 554 one to one, i.e., alternately.

An anti-deformation groove 558 may be formed in the cooling member 500. The anti-deformation groove 558 is provided in the cooling member 500, thereby being able to prevent shape deformation of the cooling member 500 by the cooling water. For example, when cooling water is injected into the cooling member 500, the injected cooling water may be concentrated in the 1/2 space of the cooling member 500 by the flow path forming groove 556 that crosses the center. Until the cooling water moves through the U-shaped flow path to the remaining 1/2 space, a large pressure can act on that space, so that at least a part of the cooling member 500 may expand or the cooling member 500 may be damaged. When the anti-deformation groove 558 is formed in the flow path of the cooling member 500, the cooling water is temporarily concentrated, whereby even if a high pressure acts on a specific section, deformation caused therefrom can be minimized. The anti-deformation grooves 558 may be partially disposed at intervals in the U-shaped flow path through which cooling water flows in the cooling member 500. The anti-deformation groove 558 may be located between the flow path forming groove 556 and the sealing part 540 in the width direction of the cooling member 500. The specific position of the anti-deformation groove 558 may be appropriately set so as to correspond to the flow rate and flow rate of the cooling water without excessively obstructing the cooling water flowing in through the inlet port 532. The anti-deformation groove 558 may be mainly formed in a circular shape, but this is not necessarily the case, and it may be formed in a square, triangular, or other graphic shape. Here, the width direction of the cooling member 500 may be a direction parallel to the short side of the cooling member 500. Further, here, the longitudinal direction of the cooling member 500 may be a direction parallel to the long side of the cooling member 500.

The anti-deformation fastening part 568 may be formed in the anti-deformation groove 558. The anti-deformation fastening part 568 may be for complementing the stiffness of the anti-deformation groove 558. The anti-deformation fastening portion 568 may be formed in all anti-deformation grooves 558, but it may be partially formed in a part of the anti-deformation grooves 558. For example, the anti-deformation fastening part 568 may be formed in the two anti-deformation grooves 558 one to one, i.e., alternately.

In addition, protrusions extending from one side of the cooling member 500 and located continuously along the longitudinal direction of the cooling member 500 may be formed in the periphery of the cooling member 500. The protrusions can be in contact with or disposed adjacent to the electrode leads of each battery cell stack or the busbars connected to the electrode leads as illustrated in Fig. 14. The electrode lead or busbar that provides electrical connections in the battery module 100 or battery pack 1000 has a structure that easily generates heat, and thus, when the above-mentioned protrusion promotes heat dissipation of the electrode lead or the busbar, the temperature rise of the battery cell can be more effectively prevented.

Meanwhile, in order to further improve the watertightness between the upper plate 510 and the lower plate 520, a sealing member 590 may be located between the upper plate 510 and the lower plate 520. When applying a conventional welding method, it was difficult to provide the sealing member 590, which is slightly fragile to heat, at the time of coupling the upper plate 510 and the lower plate 520. Therefore, when applying the welding process, in order to complement the watertightness of the welding surface, the upper plate 510 and the lower plate 520 are mainly coupled, and then a sealant or the like is applied through an additional process. However, since the cooling member 500 according to the present embodiment is formed by a mechanical coupling method, the thermally fragile sealing member 590 can be joined together during the coupling process of the upper plate 510 and the lower plate 520, thereby achieving simplification of the manufacturing process, reduction of manufacturing costs, and the like.

The sealing member 590 may include a band-shaped sealing member 592 provided to the sealing part 540. The band-shaped sealing member 592 may be provided on a surface where the upper plate 510 and the lower plate 520 contact each other, and improve the watertightness of the upper plate 510 and the lower plate 520. The band-shaped sealing member 592 is compressed by an external force when the upper plate 510 and the lower plate 520 are coupled, thereby being able to fill a gap existing between the upper plate 510 and the lower plate 520. The band-shaped sealing member 592 may prevent the cooling water inside the cooling member 500 from flowing out to the outside through the gap. Here, the band-shaped sealing member 592 may also be referred to as a water pad.

The sealing member 590 may include a ring-shaped sealing member 594. Since a hole is formed in the above fastening part 560 and a fastening member is inserted into it, the coupling between the members is formed. Therefore, the fastening part 560 has a problem that the watertightness of the cooling member 500 may be reduced. However, the cooling member 500 of the present embodiment may further include a ring-shaped sealing member 594 provided to the fastening part 560, thereby complementing the watertightness. The ring-shaped sealing member 594 is located on the cover film 580 and seals the gap around the fastening part 560, thereby being able to improve the watertightness of the cooling member 500. Since the cooling water is mainly located inside the sealing part 540, the ring-shaped sealing member 594 may not be provided in the outer fastening part 562 formed outside the sealing part 540. However, the ring-shaped sealing member 594 may be preferably provided to the coupling fastening part 564, the flow path forming fastening part 566, and the anti-deformation fastening part 568 located inside the sealing part 540. Here, the ring-shaped sealing member 594 may be referred to as a 'water ring'.

The sealing member 590 may be made from a flexible material having elasticity. The sealing member 590 may include a silicone-based foam pad, an acrylic-based foam pad, a urethane-based foam pad, or the like as an example of materials to be manufactured.

Meanwhile, in order to effectively suppress ignition when ignition occurs in a battery cell, it may be effective to inject a liquid such as cooling water into the battery module 100 or the battery pack 1000. Providing a liquid tank inside the battery module 100 or the battery pack 1000 may have the problem of increasing the volume of the battery module and the battery pack. Thus, conventionally, a separate water tank is provided outside the battery module and the battery pack, and only when battery cell ignition is confirmed via the sensor, cooling water or the like was charged into the battery module 100 or the battery pack 1000 through a nozzle or the like extending from the water tank.

However, the water tank provided outside the battery module and the battery pack not is large in the volume, but also has a problem that the user has to manage it separately. Further, the conventional water injection system should have a separate control unit or communication unit for determining whether or not to supply cooling water, errors should not occur during its operation, and even if it operates normally, a lot of time is required because it has to go through a number of determination processes. Even after it has been decided to supply cooling water, it is difficult to quickly provide cooling water from the water tank to the battery cell if the path from the water tank to the battery module 100 or the battery cell inside the battery pack 1000 is rather long, whereby it has been difficult to restrain the cascading thermal runaway phenomenon where the conventional water injection system progresses rapidly. Therefore, in the present embodiment, an opening may be formed in the lower plate 520 so that cooling water may be immediately supplied to the fire place when ignition occurs inside the battery module 100 or the battery pack 1000.

Referring to Fig. 11, the lower plate 520 may include at least one opening 521. The opening 521 may be for injecting internal cooling water into the battery cells by heat or pressure generated by ignition when ignition occurs inside the battery cell. A plurality of openings 521 may be provided along a short side or a long side of the lower plate 520, and the cooling member 500 has a plurality of openings 521, so that cooling water can be supplied in response to a fire occurring at an unspecified position within the battery module 100 or the battery pack 1000.

Since the opening 521 of the lower plate 520 must be closed until internal ignition occurs, conventionally, the opening 521 of the lower plate 520 is filled with a member that is opened at a predetermined temperature or pressure or higher, or is inserted so as to seal the opening 521 of the lower plate 520. However, manufacturing the lower plate 520 so that the lower plate 520 includes two materials with different physical properties requires a complicated manufacturing process. Thus, there was a problem that manufacturing time and manufacturing cost increased. In addition, it has been difficult to ensure the reliability of the durability of the joint surface during heterojunction. However, the cooling member 500 of the present embodiment can reduce the manufacturing time and cost of the cooling member 500 and improve the durability through the cover film 580 disposed on the lower plate 520.

Referring to Figs. 12 and 13, the cover film 580 may be configured to close the opening 521 of the lower plate 520 before ignition of the battery cell and open the opening 521 during ignition of the battery cell. When the cover film 580 is broken by different temperatures and pressures during ignition of the battery cell, the cooling water inside the cooling member 500 is injected toward the battery cell, thereby suppressing the fire.

The cover film 580 may be provided so as to cover one surface of the lower plate 520. The cover film 580 may be attached to the lower plate 520. The outer contour shape of the cover film 580 may be similar to or identical to the outer contour shape of the lower plate 520 as a whole. A specific shape of the cover film 580 may be similar to or identical to that of the lower plate 520 except for the opening 521.

The cover film 580 can be provided with a material that is susceptible to melting under a given pressure or heat. For example, the cover film 580 can be made from a thermoplastic polymer resin having a melting point of 200°C or lower. Examples of the thermoplastic polymer resin include materials with a melting point of about 100°C or more and 200°C or less, such as high density polyethylene (HDPE), polyethylene (PE), polypropylene (PP), polyphenylene oxide (PPO), or the like.

The cover film 580 preferably has a predetermined thickness or more so as to withstand the gravity caused by the weight of the cooling water and the frictional force according to the flow of the cooling water. However, if the cover film 580 is excessively thick, the heat dissipation performance of the cooling member 500 may be degraded, and thus, it is necessary to adjust the cover film to an appropriate thickness. The cover film 580 can be made to have a thickness of 2 mm or less, or 1.5 mm or less, but considering the durability of the cover film 580 and deterioration in heat dissipation performance due to the cover film 580, it may preferably made to have a thickness of 0.5 to 1.0 mm. If the thickness of the cover film 580 is less than 0.5 mm, durability problems may occur, and if the thickness of the cover film 580 is greater than 1.0 mm, the heat dissipation performance of the cooling member 500 may be degraded.

Since the cover film 580 is arranged so as to couple with the lower plate 520, cooling water may flow between the upper surface of the cover film 580 and the lower surface of the upper plate 510. Moreover, even if the cover film 580 is added to the cooling member 500, the inflow and outflow of cooling water through the inlet/outlet ports 530 is not restricted by the cover film 580. Thus, it can be designed such that the cooling water in the cooling member 500 circulates continuously by being connected to an external heat exchanger connected to the inlet/outlet ports 530 in order to maintain its temperature homeostasis.

Referring again to Figs. 12 and 13, the lower plate 520 may include a plurality of fastening parts corresponding to the above fastening part 560. Specifically, the lower plate 520 may include a lower plate outer fastening part 522 corresponding to the outer fastening part 562, a lower plate coupling fastening part 524 corresponding to the coupling fastening part 564, a lower plate flow path forming fastening part 526 corresponding to the flow path forming fastening part 566, and a lower plate anti-deformation fastening part 528 corresponding to the anti-deformation fastening part 568.

The cover film 580 may include a plurality of fastening parts corresponding to the fastening part 560 described above. The cover film 580 may include a film outer fastening part 582 corresponding to the outer fastening part 562 and the lower plate outer fastening part 522, a film coupling fastening part 584 corresponding to the coupling fastening part 564 and the lower plate coupling fastening part 524, a film flow path forming fastening part 586 corresponding to the flow path forming fastening part 566 and the lower plate flow path forming fastening part 526, and a film anti-deformation fastening part 588 corresponding to the anti-deformation fastening portion 568 and the lower plate anti-deformation fastening part 528. Such fastening parts may also be formed on the upper plate 510, and the fastening member can pass through holes formed in the fastening part (not shown) of the upper plate 510, the fastening parts 522,524,526 and 528 of the lower plate 520, and the fastening parts 582,584,586 and 588 of the cover film 580 to couple the upper plate 510, the lower plate 520 and the cover film 580.

Here, the fastening parts formed on the lower plate 520 and the cover film 580 may be formed beforehand before assembling the cooling member 500, but may be formed after assembling the lower plate 520 and the cover film 580.

A film outer fastening part 582, a film coupling fastening part 584, a film flow path forming fastening part 586, and a film anti-deformation fastening part 588 may be formed in the cover film 580. The band-shaped sealing member 592 may be disposed between the film outer fastening part 582 and the film fastening part 584 so as to correspond to the sealing part 540. The ring-shaped sealing member 594 may be disposed so as to correspond to the film coupling fastening part 584, the film flow path forming fastening part 586, and the film anti-deformation fastening part 588. The cover film 580 may overlap with the lower plate 520 such that the fastening parts 582, 584, 586 and 588 of the cover film 580 and the fastening parts 522, 524, 526 and 528 of the lower plate 520 correspond to each other. After the cover film 580 and the lower plate 520 are coupled, the upper plate 510 may be coupled to the upper side of the cover film 580, and the respective members can be connected by a fastening member to manufacture the cooling member 500 of the present embodiment.

In the above, in the mechanical fastening method applied to the cooling member 500 of the present embodiment of Fig. 8, the coupling by the fastening member has been mainly described, but a clinching coupling applicable to the present embodiment will be described below.

For a drawing related to the clinching coupling of the cooling member 500 of this embodiment of Fig. 8, refer to Fig. 5.

In other embodiments, a punch and die forming a pair may be used to form a clinching coupling. A recess having a shape corresponding to the punching outline may be formed in the die. When the workpiece is placed between punching and die, the punch moves toward the die, so that a part of the workpiece can be deformed to match with the shape of the punch and the recess of the die. If the workpiece consists of two or more layers, two or more layers can be mechanically coupled through the above-mentioned modification.

Through the clinching coupling, a part of the upper plate 510 and the lower plate 520 may include a recessed part 570 that is recessed in one direction. The recessed part 570 may be a part that is integrally recessed along the pressing direction by pressing a part of the upper plate 510 or the lower plate 520. The formation of the recessed part 570 allows the upper plate 510 and the lower plate 520 to be physically coupled. Here, the pressing direction may be a direction from the upper plate 510 toward the lower plate 520, or may also be a direction from the lower plate 520 toward the upper plate 510.

As a specific example, the upper surface and the lower surface of the upper plate 510 may be referred to as a first surface and a second surface, and the upper surface and the lower surface of the lower plate 520 may be referred to as a third surface and a fourth surface. Based on the first direction from the upper plate 510 to the lower plate 520, the first surface to the fourth surface may be located in the order of the first surface, the second surface, the third surface, and the fourth surface. The first surface of the upper plate 510 and the fourth surface of the lower plate 520 may form an outer surface of the cooling member 500, and the second surface of the upper plate 510 and the third surface of the lower plate 520 may face each other.

Here, when the first surface of the upper plate 510 is partially pressed, the first surface may be recessed in a first direction to have a predetermined depth and may be formed in a concave shape. Here, the lower plate 520 located under the upper plate 510 can be deformed together by pressing the upper plate 510, and the upper plate 510 and the lower plate 520 can be physically deformed by pressing, thereby being integrally coupled. Here, on the basis of the lower plate 520, the recessed part 570 may be described as protruding and forming in a convex shape.

Referring to Fig. 7, the upper plate 510 and the lower plate 520 may be recessed by pressing, respectively, wherein the recess formed in the upper plate may be referred to as an upper recessed part 571, and the recessed part formed in the lower plate 520 may be referred to as a lower recessed part 572.

The recessed part 570 is recessed to thereby have a depth, and a depth direction of the recessed part 570 may be perpendicular to a direction in which the cooling water inside the cooling member 500 flows. Here, the depth direction may be the pressing direction described above. The recessed part 570 can be formed to have a depth, so that the coupling between the upper plate 510 and the lower plate 520 can be strongly formed, and the distance between the upper plate 510 and the lower plate 520 can be prevented from slightly widening according to the pressure within the cooling member 500.

Here, the lowest point of the first surface where the recessed part 570 is formed may be located under the region where the recessed part 570 is not formed, that is, the highest point of the third surface or the highest point of the fourth surface. In this manner, when part of the upper surface (first surface) of the upper plate 510 is deformed to be located lower than the upper surface (third surface) or lower surface (fourth surface) of the lower plate 520 through the clinching process, the upper plate 510 is completely introduced into the lower plate 520, so that the coupling between the upper plate 510 and the lower plate 520 can be formed more stably.

The depth of the recessed part 570 may be larger than the thickness of the upper plate 510, the lower plate 520, or a combination thereof. If the depth of the recessed part 570 is too small, it may be difficult to ensure watertightness between the upper plate 510 and the lower plate 520. If the depth of the recessed part 570 is too large, the upper plate 510 and the lower plate 520 may be excessively deformed or partially cut. For example, when the sum of the thickness of the upper plate 510 and the thickness of the lower plate 520 in the portion where the recessed part 570 is not formed is 100, the depth of the recessed part 570 may have a value of 50 or more, or 50 to 200. However, the above values are for illustrative purposes only and are not intended to limit the depth of the recessed part 570 of the present disclosure. Here, the depth of the recessed part 570 may be based on the upper recessed part 570, and specifically, it may be the depth of the first surface of the upper recessed part 570 based on the upper plate 510 in which the recessed part 570 is not formed.

The depth of the upper recessed part 571 may be larger than that of the lower recessed part 572. This may be because, when pressing along the first direction, the upper recessed part 571 is located on the inner side of the recessed part 570 than the lower recessed part 572, so that the upper recessed part 571 forming the inner diameter must be deformed more than the lower recessed part 572 forming the outer diameter. During the process of forming the upper recessed part 571 and the lower recessed part 572 through pressing, the upper plate 510 and the lower plate 520 decrease in thickness value as the area increases. However, the upper recessed part 571 must deform to accept both the thickness changes of the upper plate 510 and the lower plate 520, and thus may have been formed to have a greater depth. Meanwhile, the first direction is for illustrating the pressing direction, and thus, when the upper plate 510 and the lower plate 520 are pressed along the second direction opposite to the first direction, the lower recessed part 572 is located inside, so that the depth of the lower recessed part 572 may have a greater value than the depth of the upper idented part 571.

The recessed partn 570 may have a shape in which the end is slightly widened in a depth direction. The lowermost end (lowest end) of the upper recessed part 571 may have a slightly larger diameter than other parts of the upper recessed part 572. The lowermost end (lowest end) of the lower recessed part 572 may have a slightly larger diameter than other parts of the lower recessed part 572. Here, the maximum value of the outer diameter of the upper recessed part 571 may be larger than the minimum value of the inner diameter of the lower recessed part 572, whereby a hooking coupling may be formed between the upper recessed part 571 and the lower recessed part 572. Therefore, even if pressure acts between the upper recessed part 571 and the lower recessed part 572 according to the internal pressure of the cooling member 500, the space between the upper plate 510 and the lower plate 520 may not be widened due to the above hooking coupling. In this manner, depending on the shape of the upper recessed part 571 and the lower recessed part 572, the coupling strength of the recessed part 570 can be further improved. At this time, the punch may press the recessed part 570 again to arrange the shape of the recessed part 570.

The outer diameter of the recessed part 570, that is, the outer diameter of the lower recessed part 572 may have a value of 5 to 11 mm, 7 to 9 mm, or 7.5 to 8.5 mm. If the diameter of the recessed part 570 is too small, it may be difficult for the upper plate 510 and the lower plate 520 to firmly couple with each other due to the recessed part 570. If the diameter of the recessed part 570 is too large, deformation of the upper plate 510 and the lower plate 520 due to the recessed part 570 may be excessive, and thus, the dimensional stability of the cooling member 500 can be reduced. Further, the diameter of the recessed part 570 may be differently designed depending on the distance between the recessed parts 570.

At this time, since the diameter of the recessed part 570 may vary depending on the diameter of the die, the outer diameter of the lower recessed part 572 described above may correspond to the inner diameter value of the recess of the die. Further, in addition to the diameter of the recessed part 570, the shape of the recessed part 570 may be determined in accordance with the shape of the punch or die used in the clinching process. For example, when the cross section of the punch is circular, the recessed part 570 may be formed in a tubular shape as a whole, and when the cross section of the punch is in a square shape, the recessed part 570 may be formed in a square tubular shape as a whole.

In the above, the case in which the first surface is pressed in the first direction to form the recessed part 570 has been described. However, this is an example in which the recessed part 570 is formed, and the fourth surface is pressed along the second direction to form the recessed part 570. Even if the recessed part 570 is pressed along the second direction, it can be fully understood through the above description, and thus, a detailed description thereof will be omitted.

Through the pressing process described above, the sealing member 590 provided as an elastic body can be compressed and thus reduced in thickness. Through the pressing process, not only the thickness of the sealing member 590 is reduced, but also the thicknesses of the upper plate 510 and the lower plate 520 may be partially deformed. The lowest point of the recessed part 570 may be the part that is pressed by the punch and receives the greatest pressure, whereby the lowest point of the recessed part 570, that is, the thickness value of the most deeply recessed part may be smaller than the thicknesses of other parts. The part corresponding to the punch before forming the recessed part 570 is pressed by the pressure of the punch, so that the side part from the highest point to the lowest point of the recessed part 570 must be formed. Therefore, as the area is increased by the pressure of the punch, the overall thickness may be reduced.

The above-mentioned clinching fastening can be applied to the cooling member 500.

For example, a clinching coupling may be applied to the groove 550 of the cooling member 500 as a whole. This may be a method in which a clinching coupling is applied to an already formed groove 550, or a method in which the groove 550 of the cooling member 500 is formed through the clinching coupling.

When the groove 550 is formed in the cooling member 500 through the clinching coupling, each groove 550 may also be referred to as a recessed part 570. Here, the clinching coupling formed in the coupling groove 554 is referred to as a first recessed part 574, the clinching coupling formed in the flow path forming groove 556 is referred to as a second recessed part 576, and a clinching coupling formed in the anti-deformation groove 558 may be referred to as a third recessed part 578.

When the flow path forming groove 556 and the anti-deformation groove 558 are formed through the clinching fastening method described above, it may have advantages such as simplification of the manufacturing process and reduction of manufacturing cost as compared with the case of using the conventional coupling method. In the manufacturing method of the cooling member 500 using the conventional welding method, a separate manufacturing process had to be added to form a flow path or an anti-deformation structure, and in forming the flow path or the anti-deformation structure, it had to be precisely designed beforehand so that dimensional tolerances did not occur. However, since the cooling member 500 of this embodiment is formed with the flow path forming groove 556 or the anti-deformation groove 558 using a clinching process used in the manufacturing process, a separate manufacturing process for this can be omitted. Further, since the upper plate 510 and the lower plate 520 are partially deformed and coupled, it is possible to have more freedom with respect to dimensional tolerances.

Meanwhile, as described above, the fastening part 560 may be further formed in the groove 550, thereby improving the overall durability of the cooling member 500. Fig. 9 shows that the fastening part 560 is formed in one of the two grooves 550, but as described above, when the clinching coupling is applied as a whole, the fastening part 560 may be formed in one of the three or four grooves 550 .

In another example, the clinching coupling may be partially applied to the groove 550 of the cooling member 500. In one example, the clinching coupling may be applied to only one or two of the couplings 554, the flow path forming groove 556, and the anti-deformation groove 558. This may be one in which a clinching coupling is applied to an already formed groove 550 or the groove 550 of the cooling member 500 is formed through the clinching coupling. In another example, the clinching coupling may be applied to a part of the coupling grooves 554, and a part of the flow path forming grooves 556, or a part of the anti-deformation grooves 558. For example, in the cooling member 500 of Fig. 9, the clinching coupling may be applied to the groove 550 in which the fastening part 560 is not formed, so that the overall durability of the cooling member 500 can be improved. When the clinching coupling is applied to the cooling member 500 in this way, the durability of the cooling member 500 can be complemented, and when a clinching joint replaces the fastening part 560, the use of the ring-shaped sealing member 594 provided to the fastening part 560 is reduced and the forming process of the fastening part is simplified, which can further secure advantages such as simplification of the manufacturing process, reduction of manufacturing cost, or improvement of watertightness of the cooling member 500.

Next, the battery module 100 or the battery pack 1000 including the above-mentioned cooling member will be described.

It should be noted in advance that the battery module 100 or battery pack 1000 described below is only one example of the battery module 100 or battery pack 1000 provided with the above-described cooling member, and thus, the following description does not limit the structure and shape of all battery modules 100 or battery packs 1000 to which cooling members can be provided.

Fig. 14 is an exploded perspective view showing a battery pack according to embodiments of the present disclosure. Fig. 15 is a perspective view of a battery module included in the battery pack according to Fig. 14.

Referring to Fig. 14, a battery pack 1000 according to another embodiment of the present disclosure may comprise at least one battery module 100, a pack frame 200 for accommodating the battery module 100, a resin layer 300 formed on the inner surface of the pack frame 200, an end plate 400 that closes the open surface of the pack frame 200, and a cooling member 500 disposed between the pack frame 200 and the battery cell stack 120. However, the components contained in the battery pack 1000 are not limited thereto, and depending on the design, the battery pack 1000 may be provided in a state where some of the above-described components are omitted, and may be provided in a state in which other components not mentioned are added.

Referring to Figs. 14 and 15, the battery module 100 provided in the present embodiment may have a module-less structure in which the module frame is omitted.

Conventionally, conventional battery packs have a double assembly structure in which a battery cell stack and partial components connected thereto are assembled to form a battery module, and the plurality of battery modules are accommodated in the battery pack again. At this time, since the battery module includes a module frame that forms the outer surface thereof, conventional battery cells are doubly protected by the module frame of the battery module and the pack frame of the battery pack. However, such a dual assembling structure has a disadvantage that not only the manufacturing cost and manufacturing process of the battery pack are increased, but also when a defect occurs in some battery cells, reassembling property is deteriorated. In addition, when a cooling member, or the like is present outside the battery module, there is a problem that the heat transfer path between the battery cell and the cooling member is somewhat complicated.

Therefore, the battery module 100 of the present embodiment may be provided in the form of a 'cell block' in which the module frame is omitted, and the battery cell stacks 120 contained in the cell block can be directly coupled to the pack frame 200 of the battery pack 1000. Thereby, the structure of the battery pack 1000 can be simplified, advantages in terms of manufacturing cost and manufacturing process can be obtained, and the weight reduction of the battery pack can be achieved.

In the following, the battery module 100 without a module frame may be referred to as a 'cell block', 'opened structure' or 'module-less structure' to distinguish it from a battery module having a module frame. However, the battery module 100 is a generic term having the battery cell stack 120 segmented into a predetermined unit for modularization regardless of the presence or absence of the module frame, and the battery module 100 should be construed as including both a typical battery module having a module frame and a cell block.

Referring to Fig. 15, the battery module 100 of the present embodiment may comprise a battery cell stack 120 in which a plurality of battery cells 110 are stacked in one direction, side surface plates 130 located at both ends in the stacking direction of the battery cell stack 120, a holding strap 140 that wraps around the side surface plate 130 and the battery cell stack 120 to fix its shape and a busbar frame 150 for covering the front and rear surfaces of the battery cell stack 120.

Meanwhile, Fig. 15 shows the battery module 100 provided in the form of a cell block, but the contents of these figures do not exclude the case of applying the battery module 100 of the sealed structure having the module frame to the battery pack 1000 of the present embodiment.

The battery cell 110 may include an electrode assembly, a cell case, and an electrode lead protruding from the electrode assembly, respectively. The battery cells 110 may be provided in a pouch shape or a prismatic shape in which the number of stacked cells per unit area can be maximized. For example, the battery cell 110 provided in a pouch type can be manufactured by accommodating an electrode assembly including a positive electrode, a negative electrode, and a separator in a cell case made of a laminated sheet and then heat-sealing a sealing part of the cell case. Meanwhile, Figs. 14 and 15 show that the positive electrode lead and the negative electrode lead of the battery cell 110 protrude in opposite directions to each other, but it is not necessarily the case, and the electrode leads of the battery cell 110 can be protruded in the same direction.

The battery cell stack 120 may be one in which a plurality of electrically connected battery cells 110 are stacked in one direction. A direction in which the plurality of battery cells 110 are stacked (hereinafter referred to as a 'stacking direction') may be a y-axis direction (or a -y-axis direction) as shown in Figs. 14 and 15, and in the following, the expression 'axial direction' may be interpreted as including all +/- directions).

Meanwhile, as the battery cell 110 is disposed along one direction, the electrode leads of the battery cell 110 may be located on one surface or one surface and the other surface facing the one surface of the battery cell stack 120. In this manner, the surface on which the electrode leads are located in the battery cell stack 120 may be referred to as the front surface or the rear surface of the battery cell stack 120, and in Figs. 14 and 15, the front surface and the rear surface of the battery cell stack 120 are shown as two surfaces facing each other on the x-axis.

Further, in the battery cell stack 120, the surface on which the outermost battery cell 110 is located may be referred to as a side surface of the battery cell stack 120, and in Figs. 14 and 15, the side surface of the battery cell stack 120 is shown as two surfaces facing each other on the y-axis.

The side surface plate 130 may be provided to maintain the overall shape of the battery cell stack 120. The side surface plate 130 is a plate-shaped member, and can supplement the stiffness of the cell block instead of the module frame. The side surface plate 130 may be disposed at both ends in the stacking direction of the battery cell stack 120, and may be in contact with the outermost battery cells 110 on both sides of the battery cell stack 120.

The side surface plate 130 may be manufactured from various materials, and may be provided by various manufacturing methods. In one example, the side surface plate 130 may be made of a plastic material manufactured by injection molding. In another example, the side surface plate 130 may be made of a leaf spring material. In another example, the side surface plate 130 may be made of a material having elasticity so that its shape may be partially deformed in response to a volume change of the battery cell stack 120 due to swelling.

The holding strap 140 can be for fixing the position and shape of the side surface plates 130 at both ends of the battery cell stack 120. The holding strap 140 may be a member having a length and a width. Specifically, the battery cell stack 120 may be located between the two side surface plates 130 in contact with the outermost battery cell 110, and the holding strap 140 may cross the battery cell stack 120 to connect the two side surface plates 130. Thereby, the holding strap 140 can prevent the distance between the two side surface plates 130 from increasing beyond a certain range, whereby the overall shape of the cell block can be maintained within a certain range.

The holding strap 140 may have hooks at both terminal ends in the longitudinal direction for stable coupling with the side plate 130. The hook may be formed by bending both terminal ends of the holding strap 140 in the longitudinal direction. Meanwhile, the side surface plate 130 may have a hook groove formed at a position corresponding to the hook, and the holding strap 140 and the side surface plate 130 can be stably coupled through the coupling of the hook and the hook groove.

The holding strap 140 may be provided with various materials or through various manufacturing methods. In one example, the holding strap 140 may be made form a material having elasticity, through which the volume change of the battery cell stack 120 due to swelling can be allowed within a certain range.

Meanwhile, the holding strap 140 is for fixing the relative position between the side surface plate 130 and the battery cell stack 120, and if the purpose of the 'fixing member' is achieved, it may be provided in a shape other than those shown. For example, the fixing member may be provided in the form of a long bolt that can cross between the two side surface plates 130 , that is, a long bolt. The side surface plate 130 may be provided with a groove into which the long bolt can be inserted, and the long bolt may be simultaneously coupled with the two side surface plates 130 through the groove to thereby fix the relative positions of the two side surface plates 130. The long bolt may be provided at an edge of the side plate 130, preferably at a position close to the vertex of the side surface plate 130. Depending on the design, it is possible to replace the holding strap 140 with the above-mentioned long bolt, but both the holding strap 140 and the long bolt can also be provided in the cell block.

The busbar frame 150 can be for covering one surface of the battery cell stack 120, and at the same time, guiding the connection between the battery cell stack 120 and an external device by being located on one surface of the battery cell stack 120. The busbar frame 150 may be located on the front surface or rear surface of the battery cell stack 120. Two busbar frames 150 may be provided so as to be located on the front surface and the rear surface of the battery cell stack 120. A busbar may be mounted on the busbar frame 150, through which the electrode lead of the battery cell stack 120 is connected to the busbar, so that the battery cell stack 120 may be electrically connected to an external device.

The busbar frame 150 may include an electrically insulating material. The busbar frame 150 can restrict contact of the busbar with other portions of the battery cells 110 other than the portion joined to the electrode lead, and can prevent an electrical short circuit from occurring. The pack frame 200 can be for protecting the battery module 100 and the electrical equipment connected thereto from external physical impact. The pack frame 200 may accommodate the battery module 100 and electrical equipment connected thereto in the inner space of the pack frame 200. Here, the pack frame 200 includes an inner surface and an outer surface, and the inner space of the pack frame 200 may be defined by the inner surface.

The battery modules 100 accommodated in the pack frame 200 can be formed in plural numbers. The plurality of battery modules 100 may be referred to as a 'module assembly'. The module assemblies can be arranged in rows and columns within the pack frame 200. Here, the 'row' may mean a set of battery modules 100 arranged in one direction, and the 'column' may mean a set of battery modules 100 arranged in a direction perpendicular to the one direction. For example, the battery modules 100 may be arranged along the stacking direction of the battery cell stack as shown in Fig. 8 to form one row or column, thereby forming a module assembly.

The pack frame 200 may be provided in an open hollow shape along one direction. For example, as shown in Fig. 8, a plurality of battery modules 100 are consecutively located along the stacking direction of the battery cells 110, and the pack frame 200 may have an open hollow shape along the above-mentioned stacking direction.

The pack frame 200 may have various structures. In one example, as shown in Fig. 8, the pack frame 200 may include a lower frame 210 and an upper frame 220. Here, the lower frame 210 may be provided in a plate shape, and the upper frame 220 may be provided in a U-shape. At least one battery module 100 may be arranged in the plate-shaped lower frame 210, and a U-shaped upper frame 220 may be provided so as to wrap the upper surface of the module assembly and two surfaces on the x-axis.

The pack frame 200 may include a portion having high thermal conductivity in order to rapidly dissipate heat generated in the inner space to the outside. For example, at least a part of the pack frame 200 may be made from a metal having high thermal conductivity, and examples thereof may be aluminum, gold, silver, copper, platinum, or an alloy containing these, and the like. In addition, the pack frame 200 may have a partially electrical insulating property, and an insulating film may be provided at a position where insulation is required, or an insulating coating can be applied. A portion of the pack frame 200 to which an insulating film or insulating coating is applied may be referred to as an insulating part.

A resin layer 300 may be provided between the battery module 100 and the inner surface of the pack frame 200. The resin layer 300 may be provided between the bottom surface of the battery module 100 and the lower frame 210. The resin layer 300 can be provided between the upper surface of the battery module 100 and the upper frame 220. Here, specifically, the resin layer 300 may be provided between the cooling member 500 and the upper frame 220 , which will be described later.

The resin layer 300 may be formed by injecting a resin between one of the inner surfaces of the battery cell stack 120 and the pack frame 200. However, it is not necessarily the case, and the resin layer 300 may be a member provided in a plate shape.

The resin layer 300 can be made from various materials, and the function of the resin layer 300 can vary depending on the material. For example, the resin layer 300 may be formed from an insulating material, and electron transfer between the battery module 100 and the pack frame 200 can be prevented through the insulating resin layer 300. In another example, the resin layer 300 may be formed of a thermally conductive material. The resin layer 300 made of a thermally conductive material transfers heat generated in the battery cell 110 to the pack frame 200, so that heat can be released/transferred to the outside. In another example, the resin layer 300 may include an adhesive material, through which the battery module 100 and the pack frame 200 can be fixed to each other. In a specific example, the resin layer 300 may be provided so as to include at least one of a silicone-based material, a urethane-based material, and an acrylic-based material.

The end plate 400 can be for protecting the battery module 100 and the electrical components connected thereto from external physical impact by sealing the open surface of the pack frame 200. Each edge of the end plate 400 can be coupled to a corresponding edge of the pack frame 200 by a method such as welding. The end plates 400 can be provided in two numbers so as to seal two open surfaces of the pack frame 200, and may be made of a metal material having a predetermined strength.

An opening 410 may be formed in the end plate 400 to expose the inlet/outlet port 530 of the cooling member 500, which will be described later, and a connector 420 for low voltage (LV) connection or high voltage (HV) connection with an external device can be mounted.

The cooling member 500 may be for cooling the inside of the battery pack 1000 by dissipating heat generated from the battery cells 110. For the description of the cooling member 500, refer to the contents described above.

Meanwhile, although the battery pack 1000 of the present embodiment has been described above as including the battery module 100 in the form of a cell block, this is not necessarily the case, and it is also possible that the battery pack 1000 includes a battery module provided in a closed structure by a module frame.

When the battery pack 1000 includes a battery module having a closed structure in this way, the cooling member 500 may be located within the module frame of the battery module, and specifically may be located between the battery cell stack 120 and the module frame. Alternatively, the cooling member 500 may be located outside the module frame of the battery module, and specifically, may be located between the battery module with a closed structure and the pack frame 200.

Meanwhile, although not specifically mentioned above, the battery pack according to an embodiment of the present disclosure may include a battery management system (BMS) and/or a cooling device that manage the temperature or voltage of the battery.

The battery pack according to an embodiment of the present disclosure can be applied to various devices. The device to which the battery pack is applied may be a vehicle means such as an electric bicycle, an electric vehicle, or a hybrid vehicle. However, but the above-mentioned device is not limited thereto, and the battery pack according to the present embodiment can be used for various devices in addition to the above illustrations, which also falls within the scope of the present disclosure.

Although preferred embodiments of the present disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery module
110: battery cell
120: battery cell stack
130: side surface plate
140: holding strap
150: busbar frame
200: pack frame
300: resin layer
400: end plate
500: cooling member
510: upper plate
520: lower plate
530: inlet/outlet port
540: sealing part
550: groove
560: fastening part
570: recessed part
580: cover film
590: sealing member

## Claims

1. A cooling member (500) comprising:
an upper plate (510), a lower plate (520), and cooling water contained into an inner space between the upper plate and the lower plate,
wherein sealing parts (540) are formed at edges of the upper plate (510) and the lower plate (520),
wherein a coupling groove (554) is formed inside the sealing part (540),
wherein a fastening part (560) coupled by a fastening member is formed outside the sealing part (540); **characterized in that**
a recessed part (570), which is formed by introducing the upper plate (510) into the lower plate (520) or by introducing the lower plate (520) into the upper plate (510), is formed in the cooling member (500),
the recessed part (570) has a depth, wherein a direction in which the depth extends is perpendicular to the direction of flow of cooling water inside the cooling member (500), and
the recessed part (570) is formed by clinching coupling in the coupling groove (554).

2. The cooling member (500) according to claim 1, wherein:
a sealing member (590) is located between the upper plate (510) and the lower plate (520) on which the sealing part (540) is formed.

3. The cooling member (500) according to claim 1, wherein:
a first recessed part (574), which is formed by introducing the upper plate (510) into the lower plate (520) or by introducing the lower plate (520) into the upper plate, (510) is formed in the coupling groove (554).

4. The cooling member (500) according to claim 1, wherein:
a flow path forming groove (556) that guides the flow of cooling water is formed in the cooling member (500).

5. The cooling member according to claim 4, wherein:
a second recessed part (576), which is formed by introducing the upper plate (510) into the lower plate (520) or by introducing the lower plate (520) into the upper plate (510), is formed in the flow path forming groove (556).

6. The cooling member (500) according to claim 1, wherein:
an anti-deformation groove (558) that prevents shape deformation due to the inflow of cooling water is formed in the cooling member (500).

7. The cooling member (500) according to claim 6, wherein:
a third recessed part (578), which is formed by introducing the upper plate (510) into the lower plate (520) or by introducing the lower plate (520) into the upper plate (510), is formed in the anti-deformation groove (558).

8. The cooling member (500) according to claim 1, wherein:
the recessed part (570) includes an upper recessed part (571) in which the upper plate (510) is deformed and a lower recessed part (572) in which the lower plate (520) is deformed, and
the lowest point of the upper surface of the upper recessed part (571) is located below the upper surface of the lower plate (520) on which the recessed part (570) is not formed.

9. The cooling member (500) according to claim 8, wherein:
the lowest point of the upper surface of the upper recessed part (571) is located under the lower surface of the lower plate (520) in which the recessed part (570) is not formed.

10. The cooling member (500) according to claim 9, wherein:
the recessed part (570) includes an upper recessed part (571)in which the upper plate is deformed and a lower recessed part (572) in which the lower plate (520) is deformed, and
the maximum value of the outer diameter of the upper recessed part (572) is larger than the minimum value of the inner diameter of the lower recessed part (571).

11. The cooling member (500) according to claim 1, wherein:
the cooling member (500) further comprises an inlet port (532) and an outlet port (534) for injecting cooling water into an inner space between the upper plate (510) and the lower plate (520),
the inlet port (532) and the outlet port (534) are connected to an external heat exchanger, and
cooling water of the cooling member (500) is circulated through the inlet port (532) and the outlet port (534).

12. A battery module (100) comprising the cooling member (500) according to claim 1.

13. A battery pack (1000) comprising the cooling member (500) according to claim 1.

14. The battery pack (1000) according to claim 13, wherein:
the battery pack comprises a battery module (100) having a module-less structure.

## Patentansprüche

1. Kühlelement (500), umfassend:
eine obere Platte (510), eine untere Platte (520) und Kühlwasser, das in einem Innenraum zwischen der oberen Platte und der unteren Platte enthalten ist,
wobei an Rändern der oberen Platte (510) und der unteren Platte (520) Dichtungsteile (540) ausgebildet sind,
wobei innerhalb des Dichtungsteils (540) eine Kopplungsnut (554) ausgebildet ist,
wobei außerhalb des Dichtungsteils (540) ein Befestigungsteil (560) ausgebildet ist, das durch ein Befestigungselement gekoppelt ist;
**dadurch gekennzeichnet, dass**
in dem Kühlelement (500) ein vertiefter Abschnitt (570) ausgebildet ist, der durch Einführen der oberen Platte (510) in die untere Platte (520) oder durch Einführen der unteren Platte (520) in die obere Platte (510) ausgebildet ist,
der vertiefte Abschnitt (570) eine Tiefe aufweist, wobei eine Richtung, in der sich die Tiefe erstreckt, senkrecht zur Strömungsrichtung von Kühlwasser innerhalb des Kühlelements (500) verläuft, und
der vertiefte Abschnitt (570) durch Clinch-Kopplung in der Kopplungsnut (554) ausgebildet ist.

2. Kühlelement (500) nach Anspruch 1, wobei
ein Dichtungselement (590) zwischen der oberen Platte (510) und der unteren Platte (520) angeordnet ist, an denen das Dichtungsteil (540) ausgebildet ist.

3. Kühlelement (500) nach Anspruch 1, wobei
in der Kopplungsnut (554) ein erster vertiefter Abschnitt (574) ausgebildet ist, der durch Einführen der oberen Platte (510) in die untere Platte (520) oder durch Einführen der unteren Platte (520) in die obere Platte (510) ausgebildet ist.

4. Kühlelement (500) nach Anspruch 1, wobei
in dem Kühlelement (500) eine einen Strömungsweg bildende Nut (556) ausgebildet ist, die die Strömung von Kühlwasser leitet.

5. Kühlelement nach Anspruch 4, wobei
in der einen Strömungsweg bildenden Nut (556) ein zweiter vertiefter Abschnitt (576) ausgebildet ist, der durch Einführen der oberen Platte (510) in die untere Platte (520) oder durch Einführen der unteren Platte (520) in die obere Platte (510) ausgebildet ist.

6. Kühlelement (500) nach Anspruch 1, wobei
in dem Kühlelement (500) eine Verformungsschutznut (558) ausgebildet ist, die eine Formveränderung aufgrund des Einströmens von Kühlwasser verhindert.

7. Kühlelement (500) nach Anspruch 6, wobei
in der Verformungsschutznut (558) ein dritter vertiefter Abschnitt (578) ausgebildet ist, der durch Einführen der oberen Platte (510) in die untere Platte (520) oder durch Einführen der unteren Platte (520) in die obere Platte (510) ausgebildet ist.

8. Kühlelement (500) nach Anspruch 1, wobei
der vertiefte Abschnitt (570) einen oberen vertieften Bereich (571), in dem die obere Platte (510) verformt ist, und einen unteren vertieften Bereich (572), in dem die untere Platte (520) verformt ist, einschließt, und
der tiefste Punkt der oberen Fläche des oberen vertieften Bereichs (571) sich unterhalb der oberen Fläche der unteren Platte (520) befindet, an der kein vertiefter Abschnitt (570) ausgebildet ist.

9. Kühlelement (500) nach Anspruch 8, wobei
der tiefste Punkt der oberen Fläche des oberen vertieften Bereichs (571) sich unter der unteren Fläche der unteren Platte (520) befindet, in der kein vertiefter Abschnitt (570) ausgebildet ist.

10. Kühlelement (500) nach Anspruch 9, wobei
der vertiefte Abschnitt (570) einen oberen vertieften Bereich (571), in dem die obere Platte verformt ist, und einen unteren vertieften Bereich (572), in dem die untere Platte (520) verformt ist, einschließt, und
der maximale Wert des Außendurchmessers des oberen vertieften Bereichs (572) größer ist als der minimale Wert des Innendurchmessers des unteren vertieften Bereichs (571).

11. Kühlelement (500) nach Anspruch 1, wobei
das Kühlelement (500) ferner einen Einlassanschluss (532) und einen Auslassanschluss (534) zum Einspritzen von Kühlwasser in einen Innenraum zwischen der oberen Platte (510) und der unteren Platte (520) umfasst,
der Einlassanschluss (532) und der Auslassanschluss (534) mit einem externen Wärmetauscher verbunden sind,
und
durch den Einlassanschluss (532) und den Auslassanschluss (534) Kühlwasser des Kühlelements (500) umgewälzt wird.

12. Batteriemodul (100), umfassend das Kühlelement (500) nach Anspruch 1.

13. Batteriepack (1000), umfassend das Kühlelement (500) nach Anspruch 1.

14. Batteriepack (1000) nach Anspruch 13, wobei
der Batteriepack ein Batteriemodul (100) mit einem modullosen Aufbau umfasst.

## Revendications

1. Élément de refroidissement (500) comprenant :
une plaque supérieure (510), une plaque inférieure (520), et de l'eau de refroidissement contenue dans un espace intérieur entre la plaque supérieure et la plaque inférieure,
dans lequel des parties d'étanchéité (540) sont formées aux bords de la plaque supérieure (510) et de la plaque inférieure (520),
dans lequel une rainure de couplage (554) est formée à l'intérieur de la partie d'étanchéité (540),
dans lequel une partie de fixation (560) couplée par un élément de fixation est formée à l'extérieur de la partie d'étanchéité (540) ;
**caractérisé en ce que**
une partie en creux (570), qui est formée en introduisant la plaque supérieure (510) dans la plaque inférieure (520) ou en introduisant la plaque inférieure (520) dans la plaque supérieure (510), est formée dans l'élément de refroidissement (500),
la partie en creux (570) a une profondeur, un sens dans lequel la profondeur s'étend étant perpendiculaire au sens d'écoulement de l'eau de refroidissement à l'intérieur de l'élément de refroidissement (500), et
la partie en creux (570) est formée par couplage par clinchage dans la rainure de couplage (554).

2. L'élément de refroidissement (500) selon la revendication 1, dans lequel:
un élément d'étanchéité (590) est situé entre la plaque supérieure (510) et la plaque inférieure (520) sur lesquelles la partie d'étanchéité (540) est formée.

3. L'élément de refroidissement (500) selon la revendication 1, dans lequel:
une première partie en creux (574), qui est formée en introduisant la plaque supérieure (510) dans la plaque inférieure (520) ou en introduisant la plaque inférieure (520) dans la plaque supérieure (510), est formée dans la rainure de couplage (554).

4. L'élément de refroidissement (500) selon la revendication 1, dans lequel:
une rainure de formation de trajet d'écoulement (556) qui guide l'écoulement de l'eau de refroidissement est formée dans l'élément de refroidissement (500).

5. L'élément de refroidissement selon la revendication 4, dans lequel :
une seconde partie en creux (576), qui est formée en introduisant la plaque supérieure (510) dans la plaque inférieure (520) ou en introduisant la plaque inférieure (520) dans la plaque supérieure (510), est formée dans la rainure de formation de trajet d'écoulement (556).

6. L'élément de refroidissement (500) selon la revendication 1, dans lequel :
une rainure anti-déformation (558) qui empêche une déformation de forme due à l'entrée d'eau de refroidissement est formée dans l'élément de refroidissement (500).

7. L'élément de refroidissement (500) selon la revendication 6, dans lequel:
une troisième partie en creux (578), qui est formée en introduisant la plaque supérieure (510) dans la plaque inférieure (520) ou en introduisant la plaque inférieure (520) dans la plaque supérieure (510), est formée dans la rainure anti-déformation (558).

8. L'élément de refroidissement (500) selon la revendication 1, dans lequel :
la partie en creux (570) inclut une partie en creux supérieure (571) dans laquelle la plaque supérieure (510) est déformée et une partie en creux inférieure (572) dans laquelle la plaque inférieure (520) est déformée, et
le point le plus bas de la surface supérieure de la partie en creux supérieure (571) est situé en dessous de la surface supérieure de la plaque inférieure (520) sur laquelle la partie en creux (570) n'est pas formée.

9. L'élément de refroidissement (500) selon la revendication 8, dans lequel :
le point le plus bas de la surface supérieure de la partie en creux supérieure (571) est situé sous la surface inférieure de la plaque inférieure (520) dans laquelle la partie en creux (570) n'est pas formée.

10. L'élément de refroidissement (500) selon la revendication 9, dans lequel :
la partie en creux (570) inclut une partie en creux supérieure (571) dans laquelle la plaque supérieure est déformée et une partie en creux inférieure (572) dans laquelle la plaque inférieure (520) est déformée, et
la valeur maximale du diamètre extérieur de la partie en creux supérieure (572) est supérieure à la valeur minimale du diamètre intérieur de la partie en creux inférieure (571).

11. L'élément de refroidissement (500) selon la revendication 1, dans lequel:
l'élément de refroidissement (500) comprend en outre un orifice d'entrée (532) et un orifice de sortie (534) pour injecter de l'eau de refroidissement dans un espace intérieur entre la plaque supérieure (510) et la plaque inférieure (520),
l'orifice d'entrée (532) et l'orifice de sortie (534) sont connectés à un échangeur de chaleur externe,
et
l'eau de refroidissement de l'élément de refroidissement (500) est mise en circulation à travers l'orifice d'entrée (532) et l'orifice de sortie (534).

12. Module de batterie (100) comprenant l'élément de refroidissement (500) selon la revendication 1.

13. Bloc-batterie (1000) comprenant l'élément de refroidissement (500) selon la revendication 1.

14. Le bloc-batterie (1000) selon la revendication 13, dans lequel:
le bloc-batterie comprend un module de batterie (100) ayant une structure sans module.
